# EUROPEAN PATENT SPECIFICATION

(11) **EP 4 084 436 B1**
(45) Date of publication and mention of the grant of the patent: **22.10.2025**
(21) Application number: 21745091.5
(22) Date of filing: 25.01.2021
(51) Int. Cl.: G06F 8/65, H04L 9/08, H04W 4/40, H04W 4/50, H04W 12/033, H04W 12/30

(54) **METHOD AND APPARATUS FOR UPGRADING VEHICLE-MOUNTED DEVICE**
VERFAHREN UND VORRICHTUNG ZUR AUFRÜSTUNG EINES FAHRZEUGMONTIERTEN GERÄTES
PROCÉDÉ ET APPAREIL DE MISE À NIVEAU DE DISPOSITIF EMBARQUÉ

(30) Priority: 23.01.2020 CN 202010076954
(43) Date of publication of application: 02.11.2022
(73) Proprietor: Shenzhen Yinwang Intelligent Technologies Co., Ltd., Shenzhen City, Guangdong 518129 (CN)
(72) Inventor: YANG, Yanjiang, Shenzhen, Guangdong 518129 (CN); WEI, Zhuo, Shenzhen, Guangdong 518129 (CN); LIN, Hsiao-Ying, Shenzhen, Guangdong 518129 (CN)
(74) Representative: Gill Jennings & Every LLP
(86) International application number: PCT/CN2021/073614
(87) International publication number: WO 2021/148028

(56) References cited:
- WO-A1-2019/081395
- WO-A1-2019/212403
- CN-A- 106 484 457
- CN-A- 110 032 382
- CN-A- 110 032 382
- CN-A- 110 225 063
- DE-A1- 102017 218 872
- US-A1- 2019 187 291
- US-A1- 2019 187 971

## Description

### TECHNICAL FIELD

This application relates to the field of internet of vehicles technologies, and in particular, to a vehicle-mounted device upgrade method and apparatus.

### BACKGROUND

Over-the-air of firmware and software of a vehicle-mounted device is an indispensable function of a vehicle in an internet of vehicles in the future. However, according to a conventional method for upgrading firmware and software of a vehicle-mounted device, a vehicle is recalled and then upgraded. In this method, upgrade efficiency is low because of a long upgrade period.

Therefore, a more flexible over-the-air (OTA) manner should be used to upgrade the vehicle-mounted device. However, upgrade of the vehicle-mounted device on the vehicle has particularity. To be specific, a plurality of vehicle-mounted devices that have upgrade dependency relationships may be included in one upgrade process. For example, upgrade of a device A depends on completion of upgrade of a device B and a device C, where the device B and the device C are depended devices, and the device A is a dependent device. Therefore, how to ensure that a dependent device can be upgraded only after a depended device is upgraded is a technical problem that urgently needs to be resolved.

DE102017218872A1 relates to method and device for updating software of a motor vehicle control unit. US2019187971A1 relates to method and system for providing secure over-the-air vehicle updates. CN110032382A relates to automobile electronic control unit upgrading method and system and terminal device. WO2019212403A1 relates to method for upgrading vehicle-mounted device, and related device.

### SUMMARY

Implementations of this application provide a vehicle-mounted device upgrade method and apparatus, to ensure that a vehicle-mounted device is upgraded only after all vehicle-mounted devices on which the vehicle-mounted device depends are upgraded. In other words, a correct upgrade sequence is ensured, and normal running of the vehicle-mounted devices is ensured.

The invention has been defined in the independent claims. Further specific technical features have been defined in the dependent claims.

Based on the disclosed solution, when upgrade of the first vehicle-mounted device depends on completion of upgrade of the second vehicle-mounted device, the second vehicle-mounted device sends the first sub-key to the first vehicle-mounted device after determining that upgrade of the second vehicle-mounted device succeeds. The first sub-key is used to construct the first key for decrypting the first ciphertext, and the first ciphertext is obtained by encrypting the first upgrade file of the first vehicle-mounted device. This ensures that the first vehicle-mounted device is upgraded only when upgrade of the second vehicle-mounted device is completed, thereby ensuring a correct upgrade sequence and normal running of the vehicle-mounted device.

Based on the disclosed solution, the first sub-key used to construct the first key is used to generate a ciphertext of the second upgrade file of the second vehicle-mounted device. In this way, the second vehicle-mounted device can obtain the first sub-key only after the second ciphertext is decrypted, thereby improving security of the second sub-key in a transmission process.

Based on the disclosed solution, after obtaining the plurality of sub-keys obtained by dividing the first key, the first vehicle-mounted device restores or constructs the first key to decrypt the first ciphertext. This ensures normal upgrade of the first vehicle-mounted device.

Based on the disclosed solution, when upgrade of the first vehicle-mounted device depends on completion of upgrade of the second vehicle-mounted device, the first sub-key in the sub-keys obtained by dividing the first key is in the second vehicle-mounted device. After the upgrade of the second vehicle-mounted device is completed, the first vehicle-mounted device receives the first sub-key from the second vehicle-mounted device, and then can construct the first key for decrypting the first ciphertext, so as to decrypt the first key to complete the upgrade. This ensures that the first vehicle-mounted device is upgraded only when upgrade of the second vehicle-mounted device is completed, thereby ensuring a correct upgrade sequence and normal running of the vehicle-mounted device.

Based on the disclosed solution, the first vehicle-mounted device can learn of a vehicle-mounted device on which an upgrade of the first vehicle-mounted device depends, can determine whether sub-keys obtained by dividing the first key are received, and can ensure that a correct first key is restored to complete the upgrade.

Based on the disclosed solution, the vehicle sends, to the first vehicle-mounted device, the first ciphertext and the second sub-key used to construct the first key for decrypting the first ciphertext, so that the first vehicle-mounted device restores or constructs the first key. This ensures normal upgrade of the first vehicle-mounted device.

Based on the disclosed solution, efficiency of obtaining the first sub-key by the second vehicle-mounted device is relatively high, thereby improving upgrade efficiency of the vehicle-mounted device. In addition, power consumption of the server is reduced.

Based on the disclosed solution, the vehicle can manage normal upgrade of the vehicle according to the upgrade policy.

Based on the disclosed solution, the first vehicle-mounted device can learn of a vehicle-mounted device on which an upgrade of the first vehicle-mounted device depends, can determine whether sub-keys obtained by dividing the first key are received, and can ensure that a correct first key is restored to complete the upgrade.

Based on the disclosed solution, the first sub-key is used to generate the second ciphertext of the second upgrade file of the second vehicle-mounted device. When upgrade of the first vehicle-mounted device depends on completion of upgrade of the second vehicle-mounted device, the second vehicle-mounted device may obtain the first sub-key, and send the first sub-key to the first vehicle-mounted device after determining that upgrade of the second vehicle-mounted device succeeds, so that the first vehicle-mounted device completes upgrade. This ensures that the first vehicle-mounted device is upgraded only when upgrade of the second vehicle-mounted device is completed, thereby ensuring a correct upgrade sequence and normal running of the vehicle-mounted device.

Based on the disclosed solution, the second vehicle-mounted device can learn of a device to which the sub-key needs to be sent, thereby ensuring normal upgrade.

Based on the disclosed solution, the second vehicle-mounted device can learn of a type of the second vehicle-mounted device, to normally complete upgrade.

Based on the disclosed solution, the vehicle may send, to the first vehicle-mounted device, the second sub-key used to construct the first key for decrypting the first ciphertext, so that the first vehicle-mounted device restores or constructs the first key. This ensures normal upgrade of the first vehicle-mounted device.

Based on the disclosed solution, the vehicle can manage normal upgrade of the vehicle according to the upgrade policy.

### BRIEF DESCRIPTION OF DRAWINGS

FIG. 1 is an architectural diagram of a system according to an implementation;
FIG. 2A and FIG. 2B are an interaction diagram 1 of a vehicle-mounted device upgrade method according to an implementation of this application;
FIG. 3 is a schematic diagram of an upgrade file according to an implementation of this application;
FIG. 4 is a schematic diagram of N entrusted key units according to an implementation of this application;
FIG. 5 is a schematic diagram of content included in a first piece of information used to generate a ciphertext of an upgrade file according to an implementation of this application;
FIG. 6 is another schematic diagram of content included in a first piece of information used to generate a ciphertext of an upgrade file according to an implementation of this application;
FIG. 7 is still another schematic diagram of content included in a first piece of information used to generate a ciphertext of an upgrade file according to an implementation of this application;
FIG. 8 is a schematic diagram of a second piece of information used to generate a ciphertext of an upgrade file according to an implementation of this application;
FIG. 9A and FIG. 9B are an interaction diagram 2 of a vehicle-mounted device upgrade method according to an implementation of this application;
FIG. 10A and FIG. 10B are an interaction diagram 3 of a vehicle-mounted device upgrade method according to an implementation of this application;
FIG. 11A and FIG. 11B are an interaction diagram 4 of a vehicle-mounted device upgrade method according to an implementation of this application;
FIG. 12A and FIG. 12B are an interaction diagram 5 of a vehicle-mounted device upgrade method according to an implementation of this application;
FIG. 13A and FIG. 13B are an interaction diagram 6 of a vehicle-mounted device upgrade method according to an implementation of this application;
FIG. 14 is a schematic diagram of a structure of an upgrade apparatus according to an implementation of this application;
FIG. 15 is a schematic block diagram of an implementation of an electronic device according to an implementation of this application; and
FIG. 16 is a schematic diagram of a structure of a vehicle-mounted device upgrade system according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

Some elements in this application are first described.
1. From a perspective of upgrade, vehicle-mounted devices can be classified into the following 1 to 5 subtypes.
   (1) Independent vehicle-mounted device: Upgrade of an independent device does not depend on completion of upgrade of any other vehicle-mounted device, and does not need to be upgraded together with another vehicle-mounted device.
   (2) Dependent vehicle-mounted device: Upgrade of a dependent vehicle-mounted device needs to depend on completion of upgrade of at least one other vehicle-mounted device. The at least one other vehicle-mounted device herein is a device on which the upgrade of the dependent vehicle-mounted device depends. The device on which the upgrade of the dependent vehicle-mounted device depends is referred to as a depended vehicle-mounted device in this implementation. In other words, the dependent vehicle-mounted device can be upgraded only after the upgrade of the depended vehicle-mounted device is completed. For example, upgrade of a vehicle-mounted device A needs to depend on completion of upgrade of a vehicle-mounted device B and a vehicle-mounted device C. Both the vehicle-mounted device B and the vehicle-mounted device C are depended vehicle-mounted devices of the vehicle-mounted device A.
   (3) Depended vehicle-mounted device: If another vehicle-mounted device can be upgraded only after the vehicle-mounted device A is upgraded, the vehicle-mounted device A is a depended device.
   (4) Homogeneous vehicle-mounted device: For the vehicle-mounted device A, if the vehicle further includes at least one other vehicle-mounted device B of a same type as the vehicle-mounted device A, and the vehicle-mounted device A and the at least one vehicle-mounted device B need to be upgraded at the same time, the vehicle-mounted device A and the at least one vehicle-mounted device B are homogeneous vehicle-mounted devices of each other. For example, a plurality of microphones are disposed on the vehicle, and the plurality of microphones are homogeneous vehicle-mounted devices of each other.
   (5) Heterogeneous device: For the vehicle-mounted device A, if the vehicle further includes at least one other vehicle-mounted device B of a type different from that of the vehicle-mounted device A, and the vehicle-mounted device A and the at least one vehicle-mounted device B need to be upgraded at the same time. In this case, the vehicle-mounted device A and the at least one vehicle-mounted device B are heterogeneous devices of each other.
   It may be understood that a type of the vehicle-mounted device may include one of the foregoing 1 to 5 subtypes, and the type of the vehicle-mounted device may further include at least two of the foregoing 2 to 5 subtypes. For example, the vehicle-mounted device is a dependent vehicle-mounted device and also a homogeneous vehicle-mounted device, or is a dependent vehicle-mounted device and also a heterogeneous device, or is a homogeneous vehicle-mounted device and also a heterogeneous device, or is a dependent vehicle-mounted device, a homogeneous vehicle-mounted device, and a heterogeneous device, or is a depended device and also a dependent device.
2. An upgrade file includes a file header and file content, and the file header at least includes at least one of the following: a device identifier, a version number, and a size of the file content.

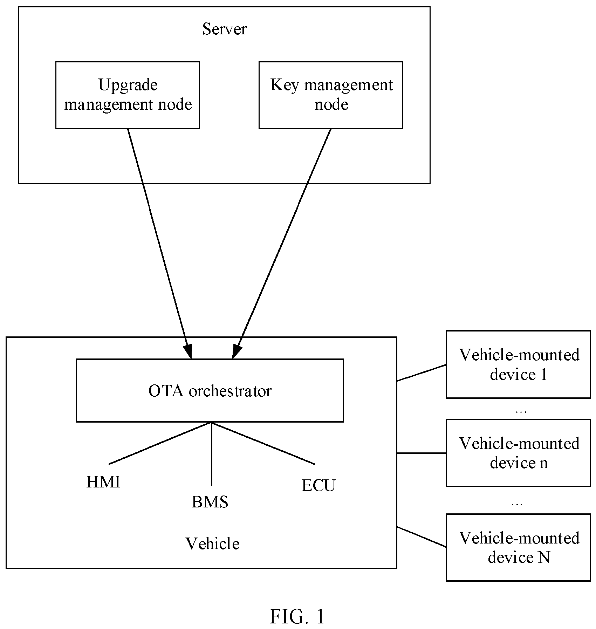

FIG. 1 is an architectural diagram of a system according to an implementation. Refer to FIG. 1. The system architecture includes a server, a vehicle, and a vehicle-mounted device. An over the air (over the air, OTA for short) orchestrator (orchestrator) in the vehicle is used to control upgrade of a vehicle-mounted device. The OTA orchestrator may include an electronic control unit (electronic control unit, ECU for short), a human machine interface (human machine interface, HMI for short), and a BMS (battery management system, BMS for short).

In a manner, the server may include an upgrade management node and a key management node, and the vehicle-mounted device is disposed on the vehicle.

The following describes the vehicle-mounted device upgrade method in this application by using specific implementations. In this implementation of this application, a symmetric key technology is used, that is, a key for encrypting an upgrade file to obtain a ciphertext of the upgrade file is the same as a key for decrypting the ciphertext.

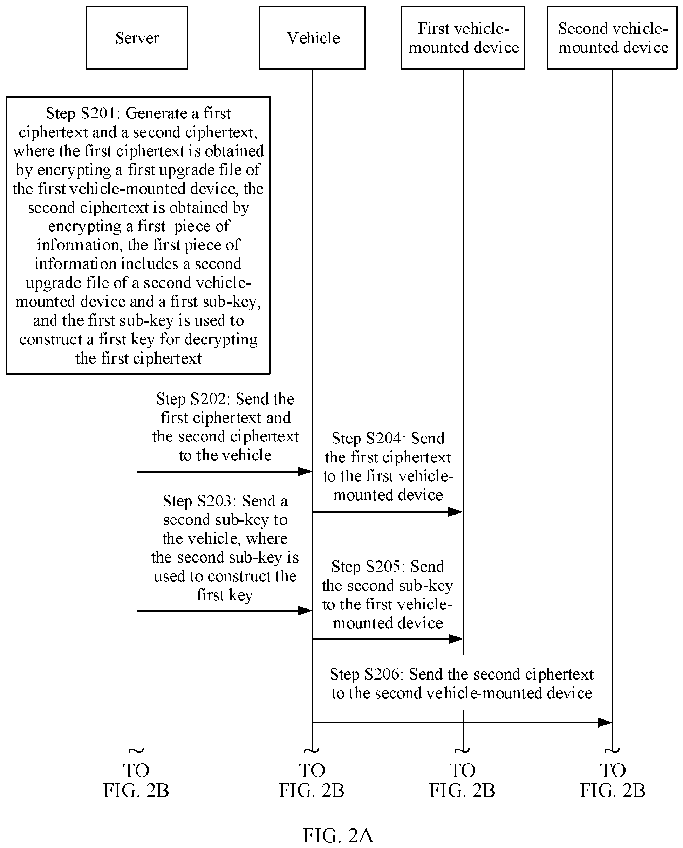

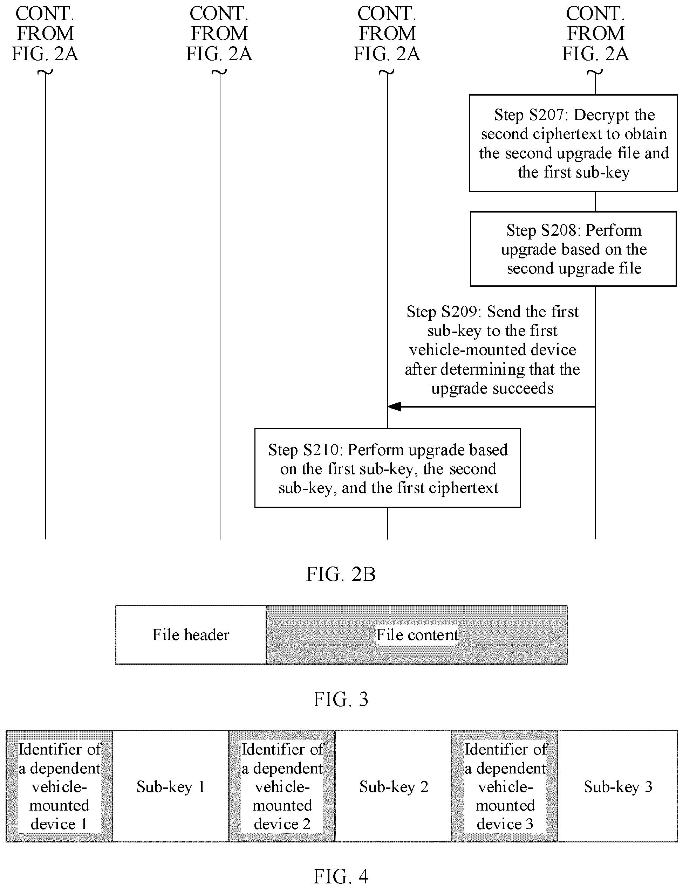

FIG. 2A and FIG. 2B are an interaction diagram 1 of a vehicle-mounted device upgrade method according to an implementation of this application. This implementation relates to an upgrade method of any dependent device. In this implementation, any dependent device is referred to as a first vehicle-mounted device. Refer to FIG. 2A and FIG. 2B. The method in this implementation includes the following steps.

Step S201: A server generates a first ciphertext and a second ciphertext, where the first ciphertext is obtained by encrypting a first upgrade file of a first vehicle-mounted device, the second ciphertext is obtained by encrypting a first piece of information, the first piece of information includes a second upgrade file of a second vehicle-mounted device and a first sub-key, and the first sub-key is used to construct a first key for decrypting the first ciphertext.

In this implementation, the first vehicle-mounted device is a dependent device, the second vehicle-mounted device is a depended device, and upgrade of the first vehicle-mounted device depends at least on completion of upgrade of the second vehicle-mounted device. It may be understood that because a type of the vehicle-mounted device may include a plurality of subtypes, the first vehicle-mounted device may also be a depended device, and the second vehicle-mounted device may also be a dependent device. The first vehicle-mounted device and the second vehicle-mounted device are vehicle-mounted devices in to-be-upgraded vehicle-mounted devices on the vehicle.

The following describes a method for generating the first ciphertext and the second ciphertext by the server.

After obtaining the first upgrade file of the first vehicle-mounted device, the server generates the first key used to encrypt the first upgrade file. The first upgrade file may be shown in FIG. 3. Refer to FIG. 3. The first upgrade file includes a file header and file content. Then, the first key is divided into M sub-keys, where M is a value obtained by adding 1 and a quantity of vehicle-mounted devices on which upgrade of the first vehicle-mounted device depends, that is, upgrade of the first vehicle-mounted device depends on completion of upgrade of M-1 vehicle-mounted devices, and the M sub-keys include the first sub-key. For example, if the vehicle-mounted device 1 depends on completion of upgrade of the vehicle-mounted device 2 and the vehicle-mounted device 3, a first key of an upgrade file of a vehicle-mounted device 1 is divided into three sub-keys. For another example, if the vehicle-mounted device 1 depends on completion of upgrade of the vehicle-mounted device 2, the vehicle-mounted device 3, and a vehicle-mounted device 4, the first key of the upgrade file of the vehicle-mounted device 1 is divided into four sub-keys. The M-1 sub-keys in the M sub-keys are respectively used to generate ciphertexts of upgrade files of M-1 other vehicle-mounted devices on which the upgrade of the first vehicle-mounted device depends, and a second sub-key in the M sub-keys other than the M-1 sub-keys is stored in the server. If the server includes an upgrade management node and a key management node, the second sub-key is stored in the key management node.

For example, the upgrade of the first vehicle-mounted device depends on completion of upgrade of four vehicle-mounted devices. In this case, the first key is divided into five sub-keys, the second sub-key is stored in the server, and four sub-keys other than the second sub-key are respectively used to generate ciphertexts of upgrade files of the four vehicle-mounted devices on which upgrade of one vehicle-mounted device depends.

The second vehicle-mounted device is one of M-1 other vehicle-mounted devices on which the upgrade of the first vehicle-mounted device depends, the M-1 sub-keys include the first sub-key, and the first sub-key is used to generate a second ciphertext of a second upgrade file of the second vehicle-mounted device. The following describes that the server is used to generate the second ciphertext by using the first sub-key.

After obtaining the second upgrade file of the second vehicle-mounted device, the server generates the second ciphertext. The second upgrade file is also shown in FIG. 3.

The server generates the first piece of information before generating the second ciphertext. The first piece of information includes the second upgrade file of the second vehicle-mounted device and the first sub-key in the M sub-keys. The first piece of information further includes a first identifier of the first vehicle-mounted device, the first identifier is associated with the first sub-key, and the first identifier and the first sub-key may be referred to as an entrusted key subunit. It may be understood that, if upgrade of other dependent vehicle-mounted devices needs to depend on completion of the upgrade of the second vehicle-mounted device, for each of the other dependent vehicle-mounted devices, the first piece of information further includes a sub-key used to construct a key for decrypting a ciphertext of an upgrade file of each of the other dependent vehicle-mounted devices and an identifier of each of the other dependent vehicle-mounted devices that is associated with the sub-key. The sub-key and the identifier of each of the other dependent vehicle-mounted devices that is associated with the sub-key are also an entrusted key subunit. In other words, if upgrade of N dependent vehicle-mounted devices needs to depend on completion of upgrade of the second vehicle-mounted device, the first piece of information includes the N entrusted key units. In one manner, the N entrusted key units may be adjacent to a tail of file content of the second upgrade file.

FIG. 4 is a schematic diagram of the N entrusted key units. Refer to FIG. 4. A quantity of dependent vehicle-mounted devices whose upgrade depend on completion of the upgrade of the second vehicle-mounted device is three: a dependent vehicle-mounted device 1, a dependent vehicle-mounted device 2, and a dependent vehicle-mounted device 3, where N=3. A first key used for decrypting a ciphertext of an upgrade file of the dependent vehicle-mounted device 1 is divided into four parts: a sub-key 11, a sub-key 12, a sub-key 13, and a sub-key 14. A first key used for decrypting a ciphertext of an upgrade file of the dependent vehicle-mounted device 2 is divided into two parts: a sub-key 21 and a sub-key 22. A first key used for decrypting a ciphertext of an upgrade file of the dependent vehicle-mounted device 3 is divided into three parts: a sub-key 31, a sub-key 32, and a sub-key 33. Each entrusted key unit includes an identifier of a dependent vehicle-mounted device whose upgrade depends on completion of the upgrade of the second vehicle-mounted device, and one of a plurality of sub-keys obtained through division.

Optionally, the first piece of information may further include indication information, and the indication information indicates a quantity N of dependent vehicle-mounted devices whose upgrade depends on completion of the upgrade of the second vehicle-mounted device. In a manner, the indication information is adjacent to the tail of the file content of the second upgrade file, and the N entrusted key units are adjacent to the indication information.

When the first piece of information does not include the indication information, the N entrusted key units may be referred to as entrusted key content. When the first piece of information includes the indication information, the N entrusted key units and the indication information may be referred to as entrusted key content.

Optionally, the first piece of information may further include a type identifier of the second vehicle-mounted device. When a type of the second vehicle-mounted device includes a plurality of subtypes, the type identifier of the second vehicle-mounted device is an identifier of a subtype with a relatively high priority in the plurality of subtypes. In one manner, a priority of a subtype of a dependent device is higher than a priority of a subtype of a heterogeneous device, the priority of the subtype of the heterogeneous device is higher than a priority of a subtype of a homogeneous device, and the priority of the subtype of the homogeneous device is higher than a priority of a subtype of a depended device. Optionally, the type identifier of the second vehicle-mounted device may be added to a header of the second upgrade file, to obtain a new file header.

Optionally, to ensure integrity of the file content of the second upgrade file, the first piece of information may further include a first message authentication code (message authentication code, MAC for short). In one manner, the first message authentication codes may be hash values of the file content of the second upgrade file and the entrusted key content. In another manner, the first message authentication code may also be a hash value of a first piece of content and a second piece of content, where the first piece of content is file content of an encrypted second upgrade file, and the second piece of content is content of an encrypted entrusted key. In still another manner, the first message authentication code may further be a hash value of a third piece of content, and the third piece of content is content obtained after the file content of the second upgrade file and the entrusted key content are encrypted.

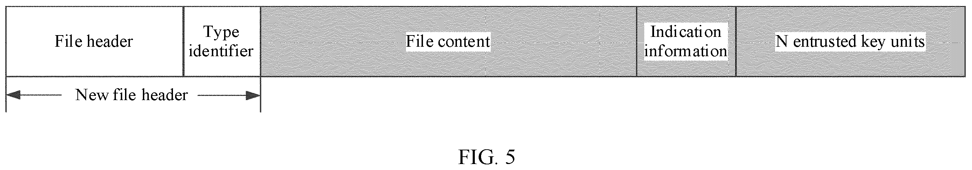

FIG. 5 is a schematic diagram of content included in a first piece of information used to generate a ciphertext of an upgrade file according to an implementation of this application. Refer to FIG. 5. The first piece of information includes a type identifier of a second vehicle-mounted device, a file header of a second upgrade file, file content of the second upgrade file, instruction information, and N entrusted key units. The type identifier is located between the file header and the file content, the indication information is adjacent to the tail of the file content of the second upgrade file, and the N entrusted key units are adjacent to the indication information.

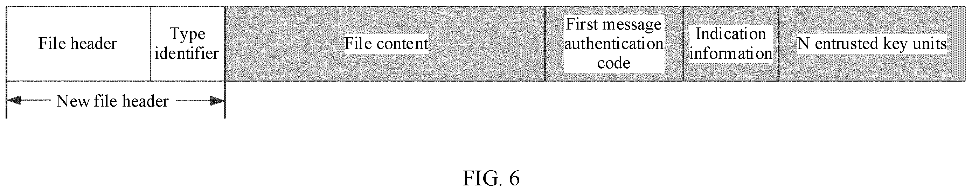

FIG. 6 is another schematic diagram of content included in a first piece of information used to generate a ciphertext of an upgrade file according to an implementation of this application. Refer to FIG. 6. The first piece of information includes a type identifier of a second vehicle-mounted device, a file header of a second upgrade file, file content of the second upgrade file, indication information, N entrusted key units, and a first message authentication code. The type identifier is located between the file header and the file content, the first message authentication code is adjacent to a tail of the file content of the second upgrade file, the indication information is adjacent to the first message authentication code, and the N entrusted key units are adjacent to the indication information.

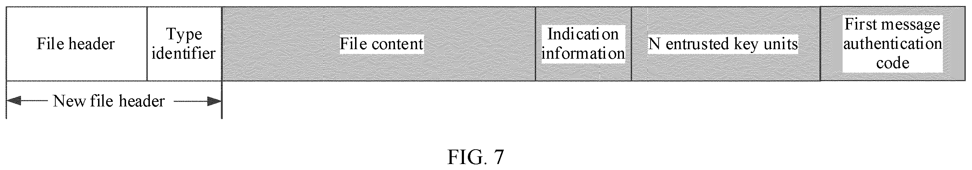

FIG. 7 is still another schematic diagram of content included in a first piece of information used to generate a ciphertext of an upgrade file according to an implementation of this application. Refer to FIG. 7. The first piece of information includes a type identifier of a second vehicle-mounted device, a file header of a second upgrade file, file content of the second upgrade file, indication information, N entrusted key units, and a first message authentication code. The type identifier is located between the file header and the file content, the indication information is adjacent to the tail of the file content of the second upgrade file, the N entrusted key units are adjacent to the indication information, and the first message authentication code is adjacent to the N entrusted key units.

After obtaining the first piece of information, the server generates a second ciphertext based on the first piece of information.

In a first implementation, that the server generates the second ciphertext based on the first piece of information includes the following a1 to a3:
a1: The server encrypts the file content of the second upgrade file by using a second key to obtain a first piece of content, where the second key is randomly selected by the server.
a2: The server encrypts entrusted key content by using the second key, to obtain a second piece of content.
a3: The server obtains a second ciphertext based on the first piece of content, the second piece of content, and a new file header. That is, the second ciphertext includes the first piece of content, the second piece of content, and the new file header.

Efficiency of obtaining the second ciphertext in this implementation is high.

In a second implementation, that the server generates the second ciphertext based on the first piece of information includes the following b1 and b2:
b1: The server encrypts the file content of the second upgrade file and entrusted key content by using the second key, to obtain a third piece of content.
b2: The server obtains the second ciphertext based on the third piece of content and a new file header. That is, the second ciphertext includes the third piece of content and the new file header.

Efficiency of obtaining the second ciphertext in this implementation is high.

In a third implementation, that the server generates the second ciphertext based on the first piece of information includes the following c1 to c4:
c1: The server encrypts the file content of the second upgrade file by using the second key, to obtain a first piece of content.
c2: The server encrypts entrusted key content by using the second key, to obtain a second piece of content.
c3: The server encrypts the first message authentication code by using a third key to obtain a fourth piece of content, where the second key and the third key may be the same or may not be the same, and the third key may also be randomly selected.
c4: The server obtains the second ciphertext based on the first piece of content, the second piece of content, the fourth piece of content, and a new file header. That is, the second ciphertext includes the first piece of content, the second piece of content, the fourth piece of content, and the new file header.

This implementation can ensure integrity of the second upgrade file.

In a fourth implementation, that the server generates the second ciphertext based on the first piece of information includes the following d1 to d3:
d1: The server encrypts the file content of the second upgrade file and entrusted key content by using the second key, to obtain a third piece of content.
d2: The server encrypts the first message authentication code by using a third key, to obtain a fourth piece of content.
d3: The server obtains the second ciphertext based on the third piece of content, the fourth piece of content, and a new file header. That is, the second ciphertext includes the third piece of content, the fourth piece of content, and the new file header.

This implementation can ensure integrity of the second upgrade file.

For generation of the first ciphertext, if the first vehicle-mounted device is a dependent vehicle-mounted device rather than a depended vehicle-mounted device, the server generates the first ciphertext based on a second piece of information. The second piece of information includes a first upgrade file of the first vehicle-mounted device.

Optionally, the second piece of information further includes a type identifier of the first vehicle-mounted device. When a type of the first vehicle-mounted device includes a plurality of subtypes, the type identifier of the first vehicle-mounted device is an identifier of a subtype with a relatively high priority in the plurality of subtypes. In one manner, a priority of a subtype of a dependent device is higher than a priority of a subtype of a heterogeneous device, the priority of the subtype of the heterogeneous device is higher than a priority of a subtype of a homogeneous device, and the priority of the subtype of the homogeneous device is higher than a priority of a subtype of a depended device. Optionally, the type identifier of the first vehicle-mounted device may be added to a header of the first upgrade file, to obtain a new file header.

Optionally, the second piece of information further includes a second message authentication code. The second message authentication code may be a hash value of the file content of the first upgrade file, or may be a hash value of a fifth piece of content, where the fifth piece of content is the encrypted file content of the first upgrade file.

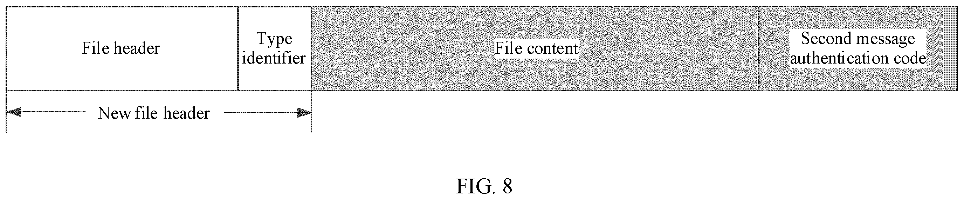

FIG. 8 is a schematic diagram of a second piece of information used to generate a ciphertext of an upgrade file according to an implementation of this application. Refer to FIG. 8. The second piece of information includes a type identifier of a first vehicle-mounted device, a file header of a first upgrade file, file content of the first upgrade file, and a message authentication code. The type identifier is located between the file header and the file content, and the message authentication code is adjacent to a tail of the file content of the first upgrade file.

After obtaining the second piece of information, the server generates a first ciphertext based on the second piece of information.

In a first implementation, that the server generates the first ciphertext based on the second piece of information includes the following e1 and e2:
e1: The server encrypts the file content of the first upgrade file by using a first key, to obtain a fifth piece of content.
e2: The server obtains the first ciphertext based on the fifth piece of content and a new file header. That is, the first ciphertext includes the fifth piece of content and the new file header.

Efficiency of obtaining the first ciphertext in this implementation is high.

In a second implementation, that the server generates the first ciphertext based on the second piece of information includes the following b1 and b2:
f1: The server encrypts file content of a second upgrade file by using the first key, to obtain the fifth piece of content.
f2: The server encrypts a second message authentication code by using a fourth key to obtain a sixth piece of content, where the first key and a fourth key may be the same or may not be the same, and the fourth key may also be randomly selected.
f3: The server obtains the first ciphertext based on the fifth piece of content, the sixth piece of content, and the new file header. That is, the first ciphertext includes the fifth piece of content, the sixth piece of content, and the new file header.

This implementation can ensure integrity of the first upgrade file.

For generation of the first ciphertext, if the first vehicle-mounted device is both a dependent vehicle-mounted device and a depended vehicle-mounted device, the method for generating the first ciphertext by the server is the same as the method for generating the second ciphertext by the server.

It may be understood that, when each to-be-upgraded vehicle-mounted device on the vehicle includes another vehicle-mounted device in addition to the first vehicle-mounted device and the second vehicle-mounted device, in addition to generating the first ciphertext and the second ciphertext, the server further generates a ciphertext of an upgrade file of the another vehicle-mounted device. It may be understood that, in all to-be-upgraded vehicle-mounted devices on the vehicle, vehicle-mounted devices that are dependent vehicle-mounted devices but not depended vehicle-mounted devices may generate ciphertexts of corresponding upgrade files according to the foregoing method for generating a first ciphertext of a first upgrade file when the first vehicle-mounted device is a dependent vehicle-mounted device but not a depended device. Depended vehicle devices in all to-be-upgraded vehicle-mounted devices on the vehicle may generate ciphertexts of corresponding upgrade files according to a method for generating a second ciphertext of a second upgrade file of the second vehicle-mounted device. The server may generate an upgrade package based on the ciphertext of the upgrade file of each to-be-upgraded vehicle-mounted device on each vehicle.

In a manner, the server may further obtain the upgrade policy. In this case, in addition to the ciphertext of the upgrade file of each to-be-upgraded vehicle-mounted device on the vehicle, the upgrade package further includes the upgrade policy. The upgrade policy includes an upgrade dependency relationship between to-be-upgraded vehicle-mounted devices on the vehicle, and the upgrade policy may indicate at least that upgrade of the first vehicle-mounted device depends on completion of upgrade of the second vehicle-mounted device. Optionally, the upgrade policy may further include a type of each to-be-upgraded vehicle-mounted device on the vehicle and/or an upgrade sequence of each to-be-upgraded vehicle-mounted device. In addition, to ensure secure transmission of the upgrade package, the server may further generate a digital signature of the upgrade package.

In a specific implementation, the server includes an upgrade management node and a key management node. The upgrade management node is configured to: generate an upgrade package, and send, to the key management node for storage, a key used to decrypt a ciphertext of an upgrade file of the to-be-upgraded vehicle-mounted device or a sub-key obtained by dividing a key. It may be understood that when the to-be-upgraded vehicle-mounted device is not a dependent device, the key sent to the key management node is a key used to decrypt the ciphertext of the upgrade file of the to-be-upgraded vehicle-mounted device. When the to-be-upgraded vehicle-mounted device is a dependent device, the key sent to the key management node is one of a plurality of sub-keys obtained by dividing the key used to decrypt the ciphertext of the upgrade file of the to-be-upgraded vehicle-mounted device. If the ciphertext of the upgrade file of the to-be-upgraded vehicle-mounted device further includes the encrypted message authentication code, the upgrade management node further sends, to the key management node for storage, a key used to encrypt the message authentication code.

Step S202: The server sends the first ciphertext and the second ciphertext to the vehicle.

In a manner, the server sends the upgrade package to the vehicle, and the upgrade package includes the first ciphertext and the second ciphertext. If the server includes the upgrade management node and the key management node, the upgrade management node sends the upgrade package to the vehicle, where the upgrade package includes the first ciphertext and the second ciphertext.

Step S203: The server sends a second sub-key to the vehicle, where the second sub-key is used to construct the first key.

When the server includes the upgrade management node and the key management node, the key management node sends the second sub-key to the vehicle through a secure channel. In addition, the key management node further sends, to the vehicle, a key that is on the vehicle and that is used to decrypt a ciphertext of an upgrade file of another to-be-upgraded vehicle-mounted device or a sub-key obtained by dividing a key.

In addition, when the first ciphertext includes the encrypted second message authentication code, the method further includes: The server sends the fourth key to the vehicle. When the server includes the upgrade management node and the key management node, the upgrade management node sends the fourth key to the key management node, and the key management node sends the fourth key to the vehicle through the secure channel. In other words, when the ciphertext of the upgrade file of the to-be-upgraded vehicle-mounted device includes the encrypted message authentication code, the method further includes: The server sends, to the vehicle, a key used to decrypt the encrypted message authentication code. When the server includes the upgrade management node and the key management node, the key management node sends, to the vehicle through the secure channel, the key used to decrypt the encrypted message authentication code.

Step S204: The vehicle sends the first ciphertext to the first vehicle-mounted device.

When the vehicle obtains the upgrade package based on the ciphertext of the upgrade file of each to-be-upgraded vehicle-mounted device, after receiving the upgrade package sent by the server, the vehicle may verify the upgrade package by using a digital signature of the upgrade package. After the verification succeeds, the vehicle obtains the first ciphertext in the upgrade package, and sends the first ciphertext to the first vehicle-mounted device.

Because the first vehicle-mounted device is the dependent device, the first ciphertext includes a type identifier indicating that the first vehicle-mounted device is the dependent device. In an optional manner, the vehicle may obtain, based on the upgrade dependency relationship included in the upgrade policy, each vehicle-mounted device on which the first vehicle-mounted device depends, and send, to the first vehicle-mounted device, an identifier of each vehicle-mounted device on which the first vehicle-mounted device depends, so that the first vehicle-mounted device learns of the vehicle-mounted device on which upgrade of the first vehicle-mounted device depends. Vehicle-mounted devices on which the first vehicle-mounted device depends include the second vehicle-mounted device.

Step S205: The vehicle sends the second sub-key to the first vehicle-mounted device.

When the first ciphertext includes the encrypted second message authentication code, the vehicle further sends the fourth key to the first vehicle-mounted device.

Step S206: The vehicle sends the second ciphertext to the second vehicle-mounted device.

When the vehicle obtains the upgrade package based on the ciphertext of the upgrade file of each to-be-upgraded vehicle-mounted device, after receiving the upgrade package sent by the server, the vehicle may verify the upgrade package by using a digital signature of the upgrade package. After the verification succeeds, the vehicle obtains the second ciphertext in the upgrade package, and sends the second ciphertext to the second vehicle-mounted device.

Step S207: The second vehicle-mounted device decrypts the second ciphertext to obtain the second upgrade file and the first sub-key.

The second vehicle-mounted device receives the second ciphertext. The second ciphertext is generated based on the first piece of information, and the first piece of information includes the second upgrade file and the first sub-key. Therefore, the second ciphertext may be decrypted to obtain the second upgrade file and the first sub-key.

It may be understood that, if the second vehicle-mounted device is not a dependent device, the second key for decrypting the second ciphertext or the second key and the third key is/are sent by the vehicle to the second vehicle-mounted device. If the second vehicle-mounted device is a dependent device, for a method for obtaining, by the second vehicle-mounted device, the second key used to decrypt the second ciphertext, refer to the method for obtaining, by the first vehicle-mounted device, the first key used to decrypt the first ciphertext, where the third key is sent by the vehicle to the second vehicle-mounted device.

Step S208: The second vehicle-mounted device performs upgrade based on the second upgrade file.

If the second ciphertext further includes the encrypted first message authentication code, the first vehicle-mounted device further decrypts the encrypted message authentication code by using the third key, verifies integrity of the obtained second upgrade file and the entrusted key content based on the message authentication code, and if the verification succeeds, may perform the upgrade based on the second upgrade file.

Step S209: The second vehicle-mounted device sends the first sub-key to the first vehicle-mounted device after determining that the upgrade succeeds.

Step S210: The first vehicle-mounted device performs upgrade based on the first sub-key, the second sub-key, and the first ciphertext.

The first vehicle-mounted device receives the first sub-key, the second sub-key, and the first ciphertext, and performs upgrade based on the first sub-key, the second sub-key, and the first ciphertext.

It may be understood that, if the upgrade of the first vehicle-mounted device further depends on completion of upgrade of another depended vehicle-mounted device other than the second vehicle-mounted device, the first vehicle-mounted device further receives another sub-key sent by the another depended vehicle-mounted device, and the another sub-key is used to construct the first key. For example, if the upgrade of the first vehicle-mounted device depends on completion of upgrade of the second vehicle-mounted device and the third vehicle-mounted device, the first key is divided into three sub-keys: a first sub-key, a second sub-key, and a third sub-key, and the first vehicle-mounted device further receives the third sub-key sent by the third vehicle-mounted device. A method for obtaining the third sub-key by the third vehicle-mounted device is the same as the method for obtaining the second sub-key by the second vehicle-mounted device. That is, the third vehicle-mounted device decrypts a third ciphertext to obtain a third upgrade file and the third sub-key. A method for obtaining the third ciphertext is the same as a method for obtaining the second ciphertext. That is, the third ciphertext is obtained by encrypting third information, and the third information includes at least the third upgrade file of the third vehicle-mounted device and the third sub-key. In other words, if the upgrade of the first vehicle-mounted device depends on completion of upgrade of the M-1 depended vehicle-mounted devices, the first vehicle-mounted device separately receives, from the M-1 depended vehicle-mounted devices, one of M sub-keys obtained by dividing the first key, and receives one sub-key from the vehicle, and receives the M sub-keys in total.

After receiving the first ciphertext, the first vehicle-mounted device determines, based on a type identifier that indicates that the first vehicle-mounted device is a dependent device and that is in a new file header included in the first ciphertext, that the first vehicle-mounted device needs to wait for one sub-key obtained by dividing a first key sent by each vehicle-mounted device on which the first vehicle-mounted device depends, to perform upgrade.

After receiving the first sub-key and the second sub-key, the first vehicle-mounted device restores the first key based on the first sub-key and the second sub-key, that is, restores the first key based on the received M sub-keys. The first ciphertext is decrypted by using the first key, to obtain the first upgrade file. If the first ciphertext further includes encrypted entrusted key content, the entrusted key content is further obtained after the first ciphertext is decrypted.

If the first ciphertext further includes the encrypted second message authentication code, the first vehicle-mounted device further decrypts the encrypted second message authentication code by using the fourth key, and verifies, based on the second message authentication code, integrity of the obtained first upgrade file or integrity of the obtained first upgrade file and the entrusted key content. If the verification succeeds, the first vehicle-mounted device may perform the upgrade based on the first upgrade file.

In this implementation, the key used to decrypt the ciphertext of the upgrade file of the dependent vehicle-mounted device is divided into a plurality of sub-keys, and other sub-keys in the plurality of sub-keys except one sub-key are separately used to generate the upgrade files of the vehicle-mounted devices on which the dependent vehicle-mounted device depends, so that the other sub-keys are sent to the dependent vehicle-mounted device after the vehicle-mounted devices on which the dependent vehicle-mounted device depends are successfully upgraded, and the dependent vehicle-mounted device can restore the key based on the sub-keys obtained by dividing the key, to complete the upgrade. In other words, according to the method in this implementation, it is ensured that the dependent vehicle-mounted device is upgraded only after the upgrade of the vehicle-mounted devices on which the dependent vehicle-mounted device depends is completed, thereby ensuring a correct upgrade sequence, and further ensuring normal running of each vehicle-mounted device.

In addition, after each vehicle-mounted device on which the dependent vehicle-mounted device depends is successfully upgraded, another sub-key is automatically sent to the dependent vehicle-mounted device, and the vehicle does not need to determine whether each vehicle-mounted device on which the dependent vehicle-mounted device depends is successfully upgraded, thereby reducing load of the vehicle.

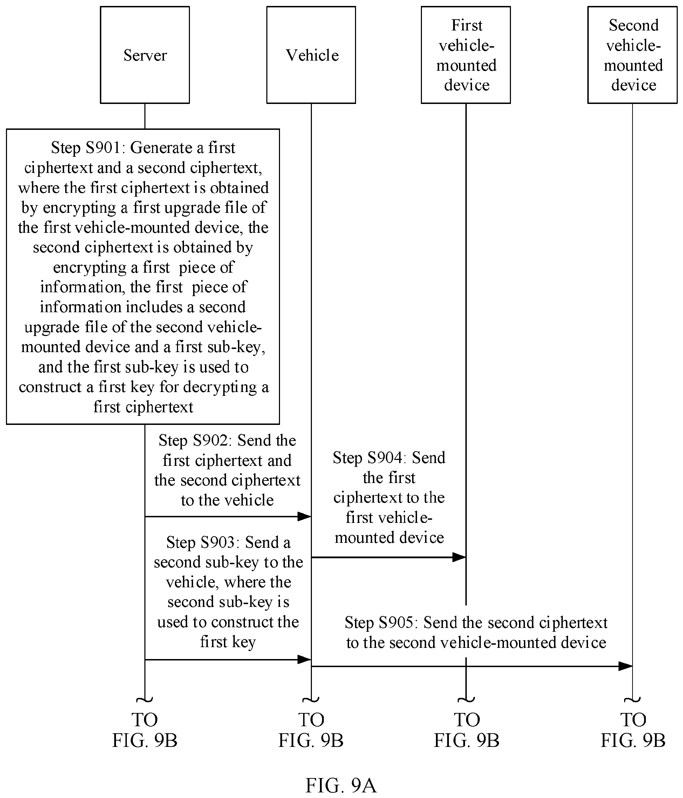

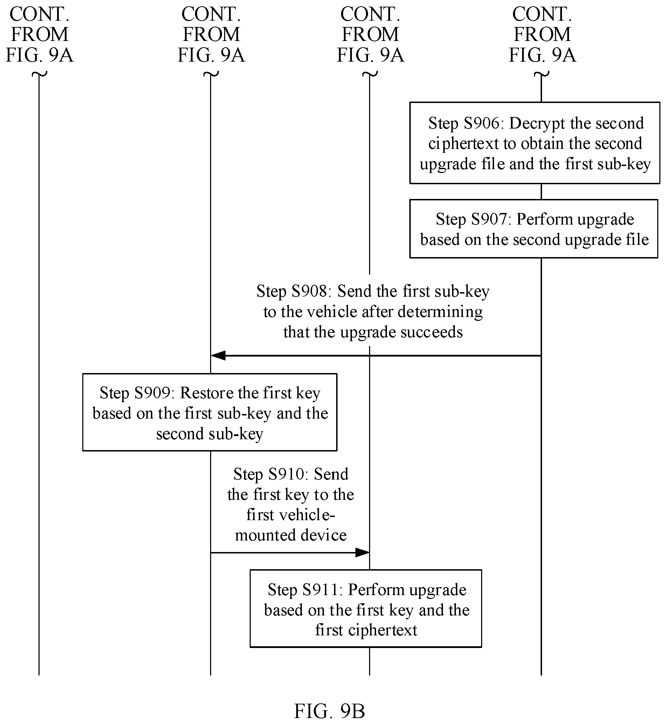

The following describes another vehicle-mounted device upgrade method with reference to an implementation shown in FIG. 9A and FIG. 9B.

FIG. 9A and FIG. 9B are an interaction diagram 2 of a vehicle-mounted device upgrade method according to an implementation of this application. This implementation relates to any method for upgrading a dependent device. In this implementation, any dependent device is referred to as a first vehicle-mounted device. Refer to FIG. 9A and FIG. 9B. The method in this implementation includes the following steps.

Step S901: A server generates a first ciphertext and a second ciphertext, where the first ciphertext is obtained by encrypting a first upgrade file of a first vehicle-mounted device, the second ciphertext is obtained by encrypting a first piece of information, the first piece of information includes a second upgrade file of a second vehicle-mounted device and a first sub-key, and the first sub-key is used to construct a first key for decrypting the first ciphertext.

For specific implementation of this step, refer to the descriptions in step S201 in the implementation shown in FIG. 2A. Details are not described herein again.

Step S902: The server sends the first ciphertext and the second ciphertext to the vehicle.

For specific implementation of this step, refer to the descriptions in step S202 in the implementation shown in FIG. 2A. Details are not described herein again.

Step S903: The server sends a second sub-key to the vehicle, where the second sub-key is used to construct the first key.

For specific implementation of this step, refer to the descriptions in step S203 in the implementation shown in FIG. 2A. Details are not described herein again.

Step S904: The vehicle sends the first ciphertext to the first vehicle-mounted device.

A difference between this step and step S204 in the implementation shown in FIG. 2A lies in that, in this implementation, the vehicle may not need to send, to the first vehicle-mounted device, the identifier of the vehicle-mounted device on which the first vehicle-mounted device depends. For other specific implementation, refer to step S204.

When the first ciphertext includes the encrypted second message authentication code, the vehicle further sends the fourth key to the first vehicle-mounted device.

Step S905: The vehicle sends the second ciphertext to the second vehicle-mounted device.

For specific implementation of this step, refer to the descriptions in step S205 in the implementation shown in FIG. 2A. Details are not described herein again.

Step S906: The second vehicle-mounted device decrypts the second ciphertext to obtain the second upgrade file and the first sub-key.

For specific implementation of this step, refer to the descriptions in step S207 in the implementation shown in FIG. 2B. Details are not described herein again.

Step S907: The second vehicle-mounted device performs upgrade based on the second upgrade file.

Step S908: The second vehicle-mounted device sends the first sub-key to the vehicle after determining that the upgrade succeeds.

Step S909: The vehicle restores the first key based on the first sub-key and the second sub-key.

The vehicle receives the first sub-key and the second sub-key, and restores the first key based on the first sub-key and the second sub-key.

It may be understood that, if the upgrade of the first vehicle-mounted device further depends on completion of upgrade of another depended vehicle-mounted device other than the second vehicle-mounted device, the vehicle further receives another sub-key sent by the another depended vehicle-mounted device, and the another sub-key is used to construct the first key. For example, if the upgrade of the first vehicle-mounted device depends on completion of upgrade of the second vehicle-mounted device and the third vehicle-mounted device, the first key is divided into three sub-keys: a first sub-key, a second sub-key, and a third sub-key, and the vehicle further receives the third sub-key sent by the third vehicle-mounted device. A method for obtaining the third sub-key by the third vehicle-mounted device is the same as the method for obtaining the second sub-key by the second vehicle-mounted device. That is, the third vehicle-mounted device decrypts a third ciphertext to obtain a third upgrade file and the third sub-key. A method for obtaining the third ciphertext is the same as a method for obtaining the second ciphertext. That is, the third ciphertext is obtained by encrypting third information, and the third information includes at least the third upgrade file of the third vehicle-mounted device and the third sub-key. That is, if the upgrade of the first vehicle-mounted device depends on completion of the upgrade of the M-1 depended vehicle-mounted devices, the vehicle separately receives, from the M-1 depended vehicle-mounted devices, one of the M sub-keys obtained by dividing the first key, receives one sub-key from the server, receives a total of the M sub-keys, and restores the first key based on the M sub-keys.

Step S910: The vehicle sends the first key to the first vehicle-mounted device.

Step S911: The first vehicle-mounted device performs upgrade based on the first key and the first ciphertext.

The first vehicle-mounted device receives the first key and the first ciphertext. The first vehicle-mounted device decrypts the first ciphertext by using the first key, to obtain at least the first upgrade file. If the first ciphertext further includes encrypted entrusted key content, the entrusted key content is further obtained after the first ciphertext is decrypted.

If the first ciphertext further includes the encrypted second message authentication code, the first vehicle-mounted device further decrypts the encrypted second message authentication code by using the fourth key, and verifies, based on the second message authentication code, integrity of file content of the obtained first upgrade file or integrity of file content of the obtained first upgrade file and the entrusted key content. If the verification succeeds, the first vehicle-mounted device may perform the upgrade based on the first upgrade file.

In this implementation, the key used to decrypt the ciphertext of the upgrade file of the dependent vehicle-mounted device is divided into a plurality of sub-keys, and other sub-keys in the plurality of sub-keys except one sub-key are separately used to generate the upgrade files of the vehicle-mounted devices on which the vehicle-mounted device depends, so that the other sub-keys are sent to the vehicle after the vehicle-mounted devices on which the vehicle-mounted device depends are successfully upgraded, and the vehicle can restore the key based on the sub-keys obtained through division of the key, and sends the key to the dependent vehicle-mounted device, to complete upgrade of the dependent vehicle-mounted device. In other words, according to the method in this implementation, it is ensured that the dependent vehicle-mounted device is upgraded only after the upgrade of the vehicle-mounted devices on which the dependent vehicle-mounted device depends is completed, thereby ensuring a correct upgrade sequence, and further ensuring normal running of each vehicle-mounted device.

In addition, after each vehicle-mounted device on which the dependent vehicle-mounted device depends is successfully upgraded, another sub-key is automatically sent to the vehicle, and the vehicle does not need to determine whether each vehicle-mounted device on which the dependent vehicle-mounted device depends is successfully upgraded, thereby reducing load of the vehicle.

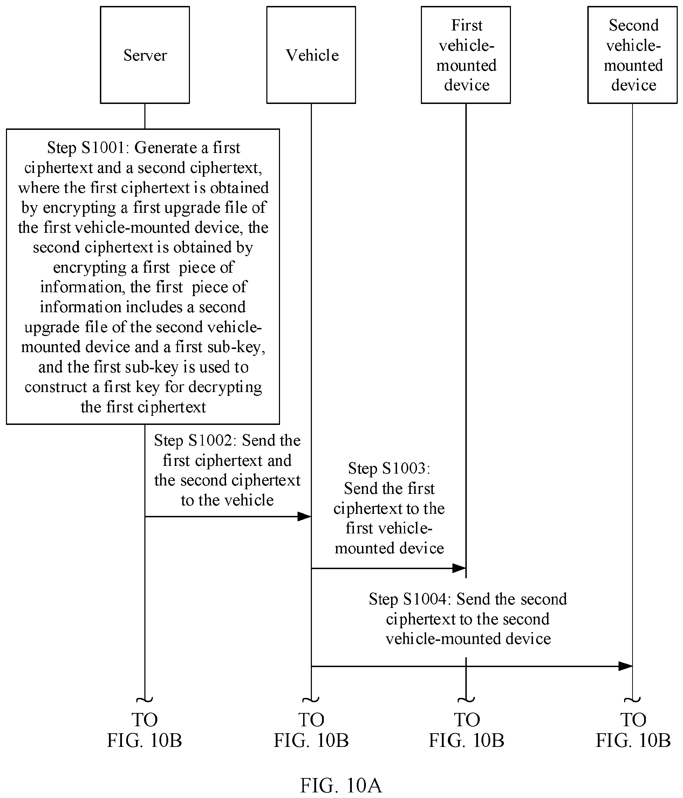

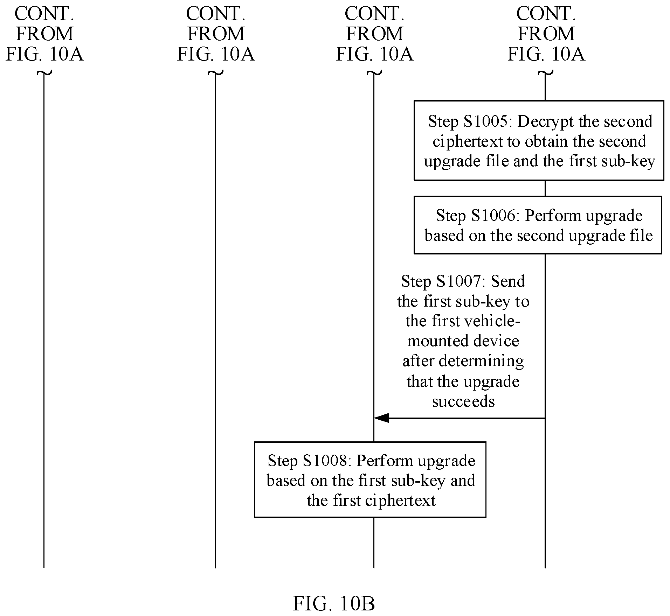

The following describes still another vehicle-mounted device upgrade method with reference to an implementation shown in FIG. 10A and FIG. 10B.

FIG. 10A and FIG. 10B are an interaction diagram 3 of a vehicle-mounted device upgrade method according to an implementation of this application. This implementation relates to an upgrade method of any dependent device. In this implementation, any dependent device is referred to as a first vehicle-mounted device. Refer to FIG. 10A and FIG. 10B. The method according to this implementation includes:

Step S1001: A server generates a first ciphertext and a second ciphertext, where the first ciphertext is obtained by encrypting a first upgrade file of a first vehicle-mounted device, the second ciphertext is obtained by encrypting a first piece of information, the first piece of information includes a second upgrade file of a second vehicle-mounted device and a first sub-key, and the first sub-key is used to construct a first key for decrypting the first ciphertext.

A difference between specific implementation of this step and step S201 in the implementation shown in FIG. 2A lies in that: If upgrade of the first vehicle-mounted device depends on completion of upgrade of M-1 depended vehicle-mounted devices, the first key is divided into M-1 sub-keys instead of M sub-keys, and the M-1 sub-keys are respectively used to generate ciphertexts of upgrade files of the M-1 other vehicle-mounted devices on which the upgrade of the first vehicle-mounted device depends. Therefore, in this implementation, if the server includes a key management node and an upgrade management node, the key management node does not store any sub-key in a plurality of sub-keys obtained by dividing a key that is used to decrypt a ciphertext of the dependent vehicle-mounted device, and the key management node may store a key used to decrypt a ciphertext of an upgrade file of an independent vehicle-mounted device. If the ciphertext of the upgrade file of the to-be-upgraded vehicle-mounted device further includes the encrypted message authentication code, the upgrade management node further sends, to the key management node for storage, a key used to encrypt the message authentication code.

In other words, a difference between this implementation and step S201 lies in that the first sub-key in the first piece of information used to generate the second ciphertext is one of the M-1 sub-keys obtained by dividing the first key.

Other specific implementations of this step are the same as those of step S201 in the implementation shown in FIG. 2A. Details are not described herein again.

Step S1002: The server sends the first ciphertext and the second ciphertext to the vehicle.

If the server includes the upgrade management node and the key management node, the upgrade management node sends the first ciphertext and the second ciphertext to the vehicle.

It may be understood that the method may further include: The server sends, to the vehicle, the key used to decrypt the ciphertext of the upgrade file of the independent vehicle-mounted device. When the server includes the upgrade management node and the key management node, the key management node sends, to the vehicle through the secure channel, the key used to decrypt the ciphertext of the upgrade file of the independent vehicle-mounted device.

In addition, when the first ciphertext includes the encrypted second message authentication code, the method further includes: The server sends the fourth key to the vehicle. When the server includes the upgrade management node and the key management node, the upgrade management node sends the fourth key to the key management node, and the key management node sends the fourth key to the vehicle through the secure channel. In other words, when the ciphertext of the upgrade file of the to-be-upgraded vehicle-mounted device includes the encrypted message authentication code, the method further includes: The server sends, to the vehicle, a key used to decrypt the message authentication code. When the server includes the upgrade management node and the key management node, the key management node sends, to the vehicle through the secure channel, the key used to decrypt the encrypted message authentication code.

Step S1003: The vehicle sends the first ciphertext to the first vehicle-mounted device.

For specific implementation of this step, refer to the descriptions in step S204 in the implementation shown in FIG. 2A. Details are not described herein again.

Step S1004: The vehicle sends the second ciphertext to the second vehicle-mounted device.

Step S1005: The second vehicle-mounted device decrypts the second ciphertext to obtain the second upgrade file and the first sub-key.

For specific implementation of this step, refer to the descriptions in step S207 in the implementation shown in FIG. 2B. Details are not described herein again.

Step S1006: The second vehicle-mounted device performs upgrade based on the second upgrade file.

For specific implementation of this step, refer to the descriptions in step S208 in the implementation shown in FIG. 2B. Details are not described herein again.

Step S1007: The second vehicle-mounted device sends the first sub-key to the first vehicle-mounted device after determining that the upgrade succeeds.

Step S1008: The first vehicle-mounted device performs upgrade based on the first sub-key and the first ciphertext.

The first vehicle-mounted device receives the first sub-key and the first ciphertext, and the first vehicle-mounted device performs the upgrade based on the first sub-key and the first ciphertext.

It may be understood that, if the upgrade of the first vehicle-mounted device further depends on completion of upgrade of another depended vehicle-mounted device other than the second vehicle-mounted device, the first vehicle-mounted device further receives another sub-key sent by the another depended vehicle-mounted device, and the another sub-key is used to construct the first key. For example, if the upgrade of the first vehicle-mounted device depends on completion of the upgrade of the second vehicle-mounted device and the third vehicle-mounted device, the first key is divided into two sub-keys: a first sub-key and a second sub-key, and the first vehicle-mounted device further receives the second sub-key sent by the third vehicle-mounted device. A method for obtaining the second sub-key by the third vehicle-mounted device is the same as the method for obtaining the first sub-key by the second vehicle-mounted device. In other words, the third vehicle-mounted device decrypts the third ciphertext to obtain the third upgrade file and the second sub-key. A method for obtaining the third ciphertext is the same as a method for obtaining the second ciphertext. In other words, the third ciphertext is obtained by encrypting the third information, and the third information includes at least the third upgrade file and the second sub-key of the third vehicle-mounted device. In other words, if the upgrade of the first vehicle-mounted device depends on completion of upgrade of the M-1 depended vehicle-mounted devices, the first vehicle-mounted device separately receives, from the M-1 depended vehicle-mounted devices, one of the M-1 sub-keys obtained by dividing the first key, and receives a total of the M-1 sub-keys.

After receiving the first ciphertext, the first vehicle-mounted device determines, based on a type identifier that indicates that the first vehicle-mounted device is a dependent device and that is in a new file header included in the first ciphertext, that the first vehicle-mounted device needs to wait for one sub-key obtained by dividing a first key sent by each vehicle-mounted device on which the first vehicle-mounted device depends, to perform upgrade.

After receiving the M-1 sub-keys, the first vehicle-mounted device restores the first key based on the M-1 sub-keys. The first ciphertext is decrypted by using the first key, to obtain the first upgrade file. If the first ciphertext further includes encrypted entrusted key content, the entrusted key content is further obtained after the first ciphertext is decrypted.

If the first ciphertext further includes the encrypted second message authentication code, the first vehicle-mounted device further decrypts the encrypted second message authentication code by using the fourth key, and verifies, based on the second message authentication code, integrity of the obtained first upgrade file or integrity of the obtained first upgrade file and the entrusted key content. If the verification succeeds, the first vehicle-mounted device may perform the upgrade based on the first upgrade file.

In this implementation, the key used to decrypt the ciphertext of the upgrade file of the dependent vehicle-mounted device is divided into at least one sub-key, and the at least one sub-key is separately used to generate an upgrade file of a vehicle-mounted device on which the dependent vehicle-mounted device depends, so that one of the at least one sub-key is sent to the dependent vehicle-mounted device after each vehicle-mounted device on which the dependent vehicle-mounted device depends is successfully upgraded, and the dependent vehicle-mounted device can restore the key based on the sub-keys obtained by dividing the key, to complete upgrade. In other words, according to the method in this implementation, it is ensured that the dependent vehicle-mounted device is upgraded only after the upgrade of the vehicle-mounted devices on which the dependent vehicle-mounted device depends is completed, thereby ensuring a correct upgrade sequence, and further ensuring normal running of each vehicle-mounted device. In addition, after each vehicle-mounted device on which the dependent vehicle-mounted device depends is successfully upgraded, one of the at least one sub-key is automatically sent to the dependent vehicle-mounted device, and the vehicle does not need to determine whether each vehicle-mounted device on which the dependent vehicle-mounted device depends is successfully upgraded, thereby reducing load of the vehicle. In addition, the vehicle does not need to send the sub-key in the at least one sub-key to the dependent vehicle-mounted device, thereby further reducing power consumption of the vehicle. In addition, the server does not need to send the sub-key in the at least one sub-key to the vehicle, thereby reducing power consumption of the server.

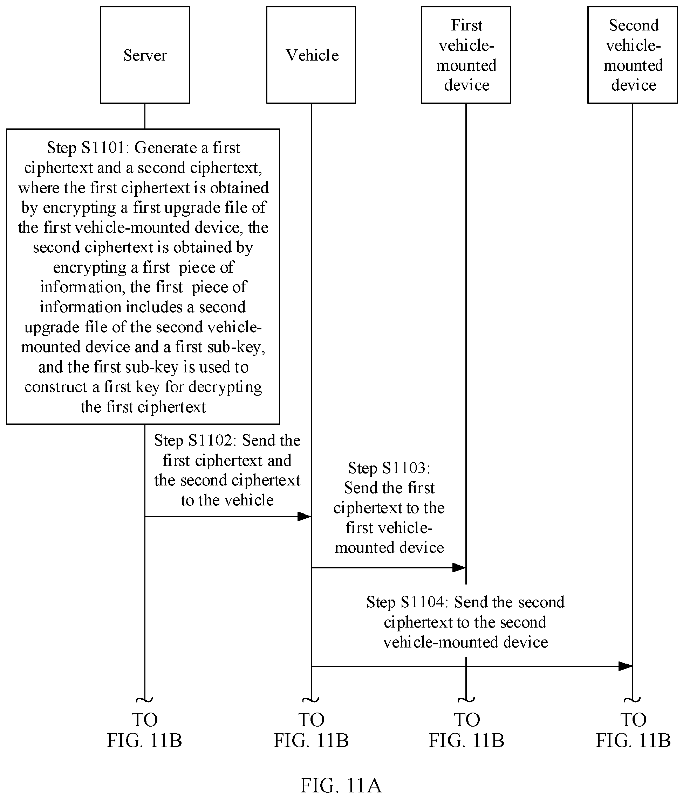

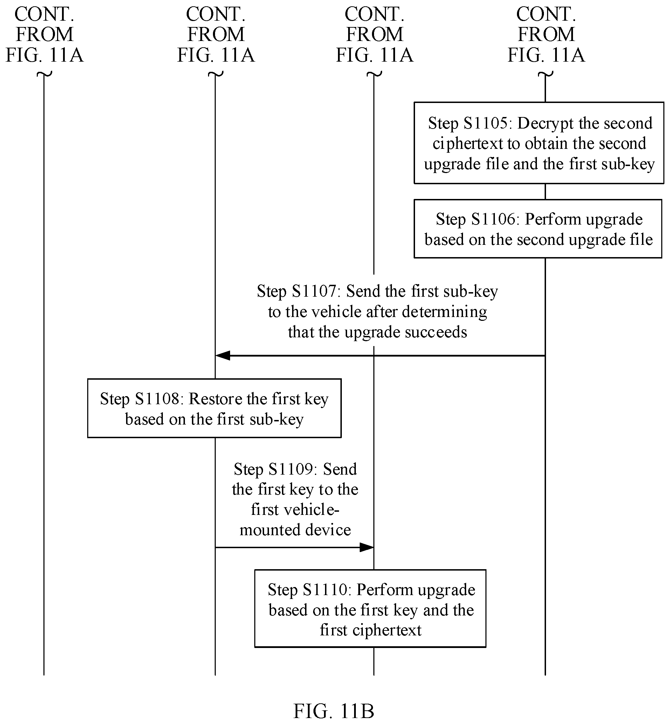

The following describes still another vehicle-mounted device upgrade method with reference to an implementation shown in FIG. 11A and FIG. 11B.

FIG. 11A and FIG. 11B are an interaction diagram 4 of a vehicle-mounted device upgrade method according to an implementation of this application. This implementation relates to any method for upgrading a dependent device. In this implementation, any dependent device is referred to as a first vehicle-mounted device. Refer to FIG. 11A and FIG. 11B. The method in this implementation includes the following steps.

Step S1101: A server generates a first ciphertext and a second ciphertext, where the first ciphertext is obtained by encrypting a first upgrade file of a first vehicle-mounted device, the second ciphertext is obtained by encrypting a first piece of information, the first piece of information includes a second upgrade file of a second vehicle-mounted device and a first sub-key, and the first sub-key is used to construct a first key for decrypting the first ciphertext.

For a specific implementation of this step, refer to descriptions in step S1001. Details are not described herein again.

Step S1102: The server sends the first ciphertext and the second ciphertext to the vehicle.

For specific implementation of this step, refer to the descriptions in step S1002 in the implementation shown in FIG. 10A and FIG. 10B. Details are not described herein again.

Step S1103: The vehicle sends the first ciphertext to the first vehicle-mounted device.

For specific implementation of this step, refer to the descriptions in step S204 in the implementation shown in FIG. 2A. Details are not described herein again.

Step S1104: The vehicle sends the second ciphertext to the second vehicle-mounted device.

Step S1105: The second vehicle-mounted device decrypts the second ciphertext to obtain the second upgrade file and the first sub-key.

For specific implementation of this step, refer to the descriptions in step S207 in the implementation shown in FIG. 2B. Details are not described herein again.

Step S1106: The second vehicle-mounted device performs upgrade based on the second upgrade file.

Step S1107: The second vehicle-mounted device sends the first sub-key to the vehicle after determining that the upgrade succeeds.

Step S1108: The vehicle restores the first key based on the first sub-key.

The vehicle receives the first sub-key, and restores the first key based on the first sub-key.

It may be understood that, if the upgrade of the first vehicle-mounted device further depends on completion of upgrade of another depended vehicle-mounted device other than the second vehicle-mounted device, the vehicle further receives another sub-key sent by the another depended vehicle-mounted device, and the another sub-key is used to construct the first key. For example, if the upgrade of the first vehicle-mounted device depends on completion of the upgrade of the second vehicle-mounted device and the third vehicle-mounted device, the first key is divided into two sub-keys: a first sub-key and a second sub-key, and the vehicle further receives the second sub-key sent by the third vehicle-mounted device. A method for obtaining the second sub-key by the third vehicle-mounted device is the same as the method for obtaining the first sub-key by the second vehicle-mounted device. In other words, the third vehicle-mounted device decrypts the third ciphertext to obtain the third upgrade file and the second sub-key. A method for obtaining the third ciphertext is the same as a method for obtaining the second ciphertext. In other words, the third ciphertext is obtained by encrypting the third information, and the third information includes at least the third upgrade file and the second sub-key of the third vehicle-mounted device. In other words, if the upgrade of the first vehicle-mounted device depends on completion of upgrade of the M-1 depended vehicle-mounted devices, the vehicle separately receives, from the M-1 depended vehicle-mounted devices, one of the M-1 sub-keys obtained by dividing the first key, receives a total of the M-1 sub-keys; and restores the first key based on the M-1 sub-keys.

Step S1109: The vehicle sends the first key to the first vehicle-mounted device.

Step S1110: The first vehicle-mounted device performs upgrade based on the first key and the first ciphertext.

The first vehicle-mounted device receives the first key and the first ciphertext, and performs the upgrade based on the first key and the first ciphertext.

In this implementation, the key used to decrypt the ciphertext of the upgrade file of the dependent vehicle-mounted device is divided into at least one sub-key, and the at least one sub-key is separately used to generate the upgrade file of the vehicle-mounted device on which the dependent vehicle-mounted device depends, so that one of the at least one sub-key is sent to the vehicle after each vehicle-mounted device on which the dependent vehicle-mounted device depends is successfully upgraded, the vehicle can recover the key based on the sub-keys obtained by dividing the key, and send the key to the dependent vehicle-mounted device, so that the vehicle-mounted device completes the upgrade. In other words, according to the method in this implementation, it is ensured that the dependent vehicle-mounted device is upgraded only after the upgrade of the vehicle-mounted devices on which the dependent vehicle-mounted device depends is completed, thereby ensuring a correct upgrade sequence, and further ensuring normal running of each vehicle-mounted device. In addition, after each vehicle-mounted device on which the dependent vehicle-mounted device depends is successfully upgraded, the dependent vehicle-mounted device automatically sends one of the at least one sub-key to the vehicle, and the vehicle restores the first key. Therefore, the first vehicle-mounted device does not need to restore the first key, and power consumption of the first vehicle-mounted device is reduced. In addition, the server does not need to send the sub-key in the at least one sub-key to the vehicle, thereby reducing power consumption of the server.

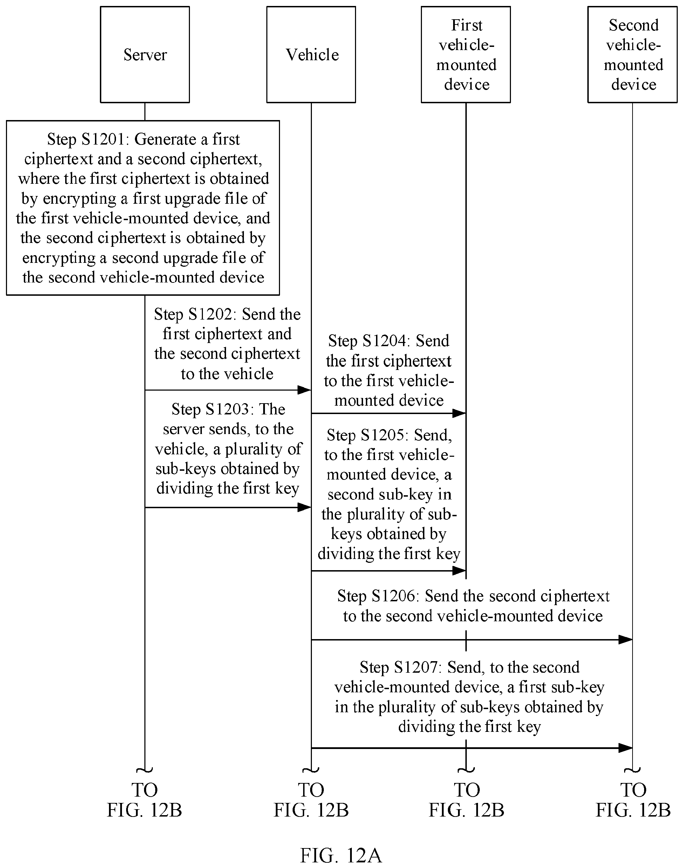

In the technical solutions in the implementations shown in FIG. 2A to FIG. 11B, the key used to decrypt the ciphertext of the upgrade file of the dependent vehicle-mounted device is divided into a plurality of sub-keys, and all or some of the plurality of sub-keys are used to generate the ciphertext of the upgrade file of the vehicle-mounted device on which the dependent vehicle-mounted device depends. In another solution, the plurality of sub-keys obtained by dividing the key used to decrypt the ciphertext of the upgrade file of the dependent vehicle-mounted device are used to generate the ciphertexts of the upgrade files of the vehicle-mounted devices on which the dependent vehicle-mounted device depends. The following describes the another solution by using implementations shown in FIG. 12A to FIG. 13B.

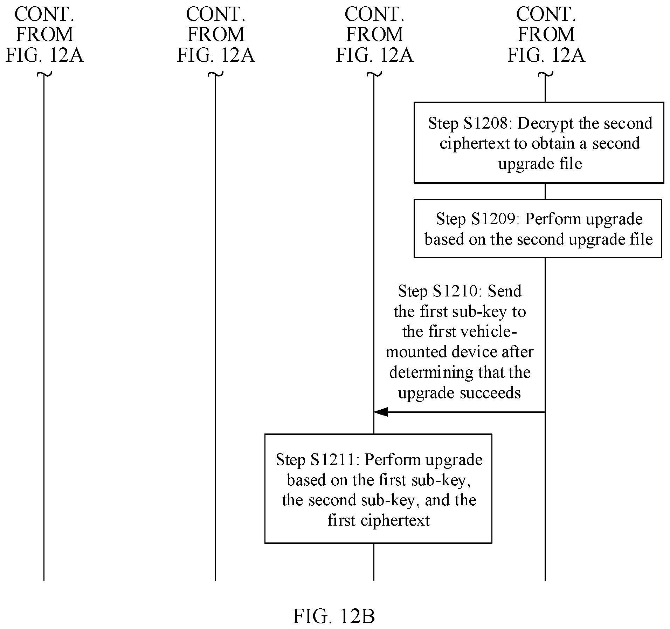

FIG. 12A and FIG. 12B are an interaction diagram 5 of a vehicle-mounted device upgrade method according to an implementation of this application. This implementation relates to an upgrade method of any dependent vehicle-mounted device. In this implementation, any dependent vehicle-mounted device is referred to as a first vehicle-mounted device. Refer to FIG. 12A and FIG. 12B. The method in this implementation includes the following steps.

Step S1201: A server generates a first ciphertext and a second ciphertext, where the first ciphertext is obtained by encrypting a first upgrade file of a first vehicle-mounted device, and the second ciphertext is obtained by encrypting a second upgrade file of a second vehicle-mounted device.

In this implementation, the first vehicle-mounted device is a dependent device, the second vehicle-mounted device is a depended device, and upgrade of the first vehicle-mounted device depends at least on completion of upgrade of the second vehicle-mounted device. It may be understood that because a type of the vehicle-mounted device may include a plurality of subtypes, the first vehicle-mounted device may also be a depended device, and the second vehicle-mounted device may also be a dependent device. The first vehicle-mounted device and the second vehicle-mounted device are vehicle-mounted devices in to-be-upgraded vehicle-mounted devices on the vehicle.

Both a method for generating the first ciphertext and a method for generating the second ciphertext in this implementation are the same as a method for generating the first ciphertext of the first upgrade file when the first vehicle-mounted device is a dependent vehicle-mounted device but not a depended vehicle-mounted device in the implementation shown in FIG. 2A and FIG. 2B. In addition to generating the first ciphertext and the second ciphertext, the server further generates a ciphertext of the upgrade file of the another vehicle-mounted device. It may be understood that upgrade file generation methods of all to-be-upgraded vehicle-mounted devices on the vehicle are the same. The server may generate an upgrade package based on the ciphertext of the upgrade file of each to-be-upgraded vehicle-mounted device on each vehicle.

In a process of generating the first ciphertext, if upgrade of the first vehicle-mounted device depends on completion of upgrade of M-1 vehicle-mounted devices, the server divides the first key into M sub-keys, and all the M sub-keys are stored in the server. If the first ciphertext includes the encrypted message authentication code, the server further stores a fourth key. A meaning of the first key is the same as that of the first key in the implementation shown in FIG. 2A and FIG. 2B, and a meaning of the fourth key is the same as that of the fourth key in the implementation shown in FIG. 2A and FIG. 2B.

In a specific implementation, the server includes an upgrade management node and a key management node. The upgrade management node is configured to: generate a ciphertext of each upgrade file, and send, to the key management node for storage, each key used to decrypt the ciphertext of the upgrade file of the to-be-upgraded vehicle-mounted device or a plurality of sub-keys obtained by dividing the key. It may be understood that when the to-be-upgraded vehicle-mounted device is not a dependent device, the upgrade management node sends, to the key management node for storage, the key used to decrypt the ciphertext of the upgrade file of the to-be-upgraded vehicle-mounted device. When the to-be-upgraded vehicle-mounted device is a dependent device, the upgrade management node sends, to the key management node for storage, a plurality of sub-keys obtained by dividing the key used to decrypt the ciphertext of the upgrade file of the to-be-upgraded vehicle-mounted device. When the ciphertext of the upgrade file of the to-be-upgraded vehicle-mounted device includes the encrypted message authentication code, the upgrade management node further sends, to the key management node for storage, a key used to decrypt the encrypted message authentication code.

In a manner, the server may further obtain the upgrade policy. In this case, in addition to the ciphertext of the upgrade file of each to-be-upgraded vehicle-mounted device on the vehicle, the upgrade package further includes the upgrade policy. The upgrade policy includes an upgrade dependency relationship between to-be-upgraded vehicle-mounted devices on the vehicle, and the upgrade policy may indicate at least that upgrade of the first vehicle-mounted device depends on completion of upgrade of the second vehicle-mounted device. Optionally, the upgrade policy may further include a type of each to-be-upgraded vehicle-mounted device on the vehicle and/or an upgrade sequence of each to-be-upgraded vehicle-mounted device. In addition, to ensure secure transmission of the upgrade package, the server may further generate a digital signature of the upgrade package.

Step S1202: The server sends the first ciphertext and the second ciphertext to the vehicle.

If the server includes the upgrade management node and the key management node, the upgrade management node sends the first ciphertext and the second ciphertext to the vehicle.

In a manner, the server sends the upgrade package to the vehicle, and the upgrade package includes the first ciphertext and the second ciphertext. If the server includes the upgrade management node and the key management node, the upgrade management node sends the upgrade package to the vehicle, where the upgrade package includes the first ciphertext and the second ciphertext.

Step S1203: The server sends, to the vehicle, a plurality of sub-keys obtained by dividing the first key.

When the server includes the upgrade management node and the key management node, the key management node sends, to the vehicle through the secure channel, the plurality of sub-keys obtained by dividing the first key. In addition, the key management node further sends, to the vehicle, a key that is on the vehicle and that is used to decrypt a ciphertext of an upgrade file of another to-be-upgraded vehicle-mounted device or a plurality of sub-keys obtained by dividing a key.

If the first ciphertext includes the encrypted message authentication code, the key management node further sends the fourth key to the vehicle through the secure channel. In other words, when the ciphertext of the upgrade file of the to-be-upgraded vehicle-mounted device includes the encrypted message authentication code, the method further includes: The server sends, to the vehicle, a key used to decrypt the encrypted message authentication code. When the server includes the upgrade management node and the key management node, the key management node sends, to the vehicle through the secure channel, the key used to decrypt the encrypted message authentication code.

Step S1204: The vehicle sends the first ciphertext to the first vehicle-mounted device.

When the vehicle obtains the upgrade package based on the ciphertext of the upgrade file of each to-be-upgraded vehicle-mounted device, after receiving the upgrade package sent by the server, the vehicle may verify the upgrade package by using a digital signature of the upgrade package. After the verification succeeds, the vehicle obtains the first ciphertext in the upgrade package, and sends the first ciphertext to the first vehicle-mounted device.

Because the first vehicle-mounted device is the dependent device, the first ciphertext includes a type identifier indicating that the first vehicle-mounted device is the dependent device. In an optional manner, the vehicle may obtain, based on the upgrade dependency relationship included in the upgrade policy, each vehicle-mounted device on which the first vehicle-mounted device depends, and send, to the first vehicle-mounted device, an identifier of each vehicle-mounted device on which the first vehicle-mounted device depends, so that the first vehicle-mounted device learns of the vehicle-mounted device on which upgrade of the first vehicle-mounted device depends. Vehicle-mounted devices on which the first vehicle-mounted device depends include the second vehicle-mounted device.

Step S1205: The vehicle sends, to the first vehicle-mounted device, a second sub-key in the plurality of sub-keys obtained by dividing the first key. In other words, the second sub-key is used to construct the first key.

The vehicle receives the plurality of sub-keys obtained by dividing the first key, and sends, to the first vehicle-mounted device, the second sub-key in the plurality of sub-keys obtained by dividing the first key.

If the vehicle receives the fourth key from the server, the vehicle further sends the fourth key to the first vehicle-mounted device.

Step S1206: The vehicle sends the second ciphertext to the second vehicle-mounted device.

Step S1207: The vehicle sends, to the second vehicle-mounted device, a first sub-key in the plurality of sub-keys obtained by dividing the first key. In other words, the first sub-key is used to construct the first key.

If the upgrade of the first vehicle-mounted device further depends on completion of upgrade of another depended vehicle-mounted device other than the second vehicle-mounted device, the vehicle further separately sends, to the another depended vehicle-mounted device, one of the plurality of sub-keys obtained by dividing the first key.

For example, if the upgrade of the first vehicle-mounted device depends on completion of upgrade of M-1 second vehicle-mounted devices, the first key of the first upgrade file is divided into M sub-keys, the vehicle sends each of the M sub-keys other than the second sub-key to the M-1 second vehicle-mounted devices, and the M-1 second vehicle-mounted devices each receive one of the M sub-keys.

Step S1208: The second vehicle-mounted device decrypts the second ciphertext to obtain the second upgrade file.

Step S1209: The second vehicle-mounted device performs upgrade based on the second upgrade file.

Step S1210: The second vehicle-mounted device sends the first sub-key to the first vehicle-mounted device after determining that the upgrade succeeds.

The second vehicle-mounted device receives the first sub-key, and sends the first sub-key to the first vehicle-mounted device after determining that the upgrade succeeds.

Step S1211: The first vehicle-mounted device performs upgrade based on the first sub-key, the second sub-key, and the first ciphertext.

The first vehicle-mounted device receives the first sub-key, the second sub-key, and the first ciphertext, and performs upgrade based on the first sub-key, the second sub-key, and the first ciphertext.

It may be understood that, if the upgrade of the first vehicle-mounted device further depends on completion of upgrade of another depended vehicle-mounted device other than the second vehicle-mounted device, the first vehicle-mounted device further receives another sub-key sent by the another depended vehicle-mounted device, and the another sub-key is used to construct the first key. For example, if the upgrade of the first vehicle-mounted device depends on completion of upgrade of the second vehicle-mounted device and the third vehicle-mounted device, the first key is divided into three sub-keys: a first sub-key, a second sub-key, and a third sub-key. The first vehicle-mounted device further receives the third sub-key sent by the third vehicle-mounted device. The third sub-key sent by the third vehicle-mounted device to the first vehicle-mounted device is sent by the vehicle to the third vehicle-mounted device. In other words, if the upgrade of the first vehicle-mounted device depends on completion of upgrade of the M-1 depended vehicle-mounted devices, the first vehicle-mounted device separately receives, from the M-1 depended vehicle-mounted devices, one of M sub-keys obtained by dividing the first key, and receives one sub-key from the vehicle, and receives the M sub-keys in total.

After receiving the first ciphertext, the first vehicle-mounted device determines, based on a type identifier that indicates that the first vehicle-mounted device is a dependent device and that is in a new file header included in the first ciphertext, that the first vehicle-mounted device needs to wait for one sub-key obtained by dividing a first key sent by each vehicle-mounted device on which the first vehicle-mounted device depends, to perform upgrade.

After receiving the first sub-key and the second sub-key, the first vehicle-mounted device restores the first key based on the first sub-key and the second sub-key, that is, restores the first key based on the received M sub-keys. The first ciphertext is decrypted by using the first key, to obtain the first upgrade file. If the first ciphertext further includes an encrypted second message authentication code, the first vehicle-mounted device further decrypts the encrypted second message authentication code by using the fourth key, and verifies integrity of the obtained first upgrade file based on the second message authentication code. If the verification succeeds, the first vehicle-mounted device may perform the upgrade based on the first upgrade file.

In this implementation, the key used to decrypt the ciphertext of the upgrade file of the dependent vehicle-mounted device is divided into a plurality of sub-keys, and other sub-keys in the plurality of sub-keys except one sub-key are separately sent to the vehicle-mounted devices on which the dependent vehicle-mounted device depends, so that the other sub-keys are sent to the dependent vehicle-mounted device after the vehicle-mounted devices on which the dependent vehicle-mounted device depends are successfully upgraded, and the dependent vehicle-mounted device can restore the key based on the sub-keys obtained by dividing the key, to complete the upgrade. In other words, according to the method in this implementation, it is ensured that the dependent vehicle-mounted device is upgraded only after the upgrade of the vehicle-mounted devices on which the dependent vehicle-mounted device depends is completed, thereby ensuring a correct upgrade sequence, and further ensuring normal running of each vehicle-mounted device. In addition, according to the method in this implementation, a process of generating an upgrade package is simple, and upgrade efficiency is relatively high.

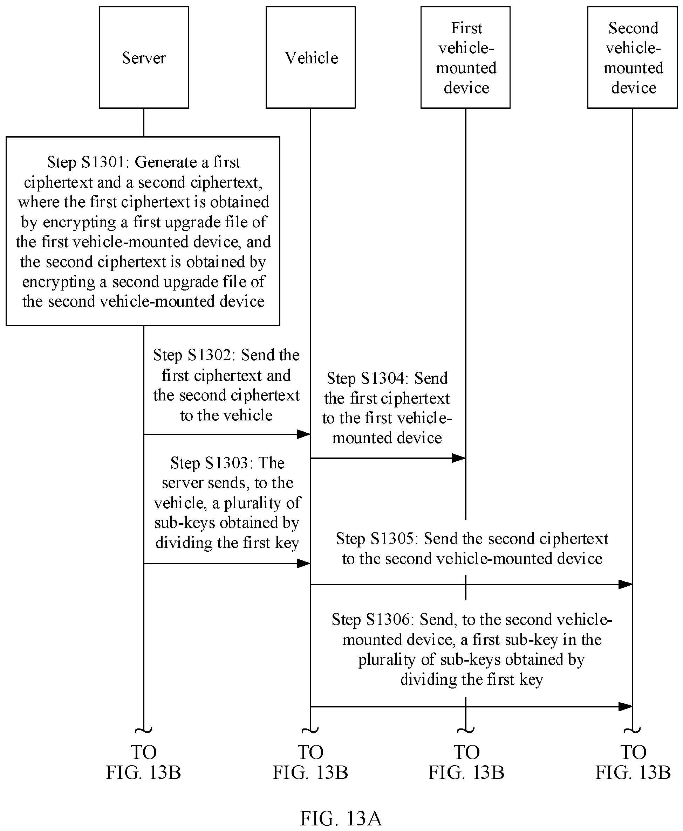

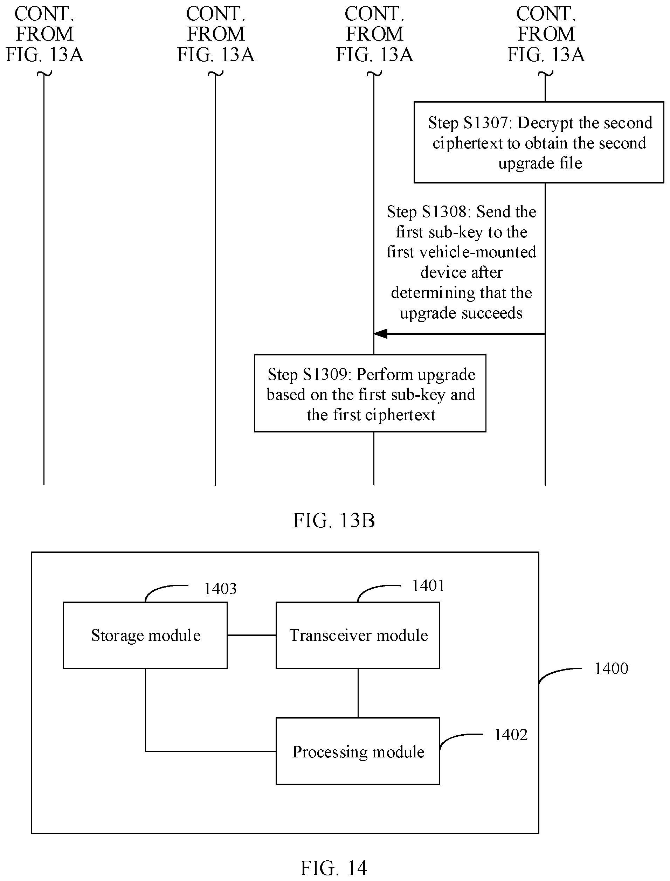

FIG. 13A and FIG. 13B are an interaction diagram 6 of a vehicle-mounted device upgrade method according to an implementation of this application. This implementation relates to an upgrade method of any dependent device. In this implementation, any dependent device is referred to as a first vehicle-mounted device. Refer to FIG. 13A and FIG. 13B. The method in this implementation includes the following steps.

Step S1301: A server generates a first ciphertext and a second ciphertext, where the first ciphertext is obtained by encrypting a first upgrade file of a first vehicle-mounted device, and the second ciphertext is obtained by encrypting a second upgrade file of a second vehicle-mounted device.

A difference between specific implementation of this step and that of step S1201 in the implementation shown in FIG. 12A lies in that: If upgrade of the first vehicle-mounted device depends on completion of upgrade of M-1 other vehicle-mounted devices, the first key used to decrypt the first ciphertext is divided into M-1 sub-keys instead of M sub-keys.

Other specific implementations of this step are the same as those of step S1201 in the implementation shown in FIG. 12A. Details are not described herein again.

Step S1302: The server sends the first ciphertext and the second ciphertext to the vehicle.

For specific implementation of this step, refer to the descriptions in step S1202 in the implementation shown in FIG. 12A. Details are not described herein again.

Step S1303: The server sends, to the vehicle, a plurality of sub-keys obtained by dividing the first key.

For specific implementation of this step, refer to the descriptions in step S1203 in the implementation shown in FIG. 12A. Details are not described herein again.

Step S1304: The vehicle sends the first ciphertext to the first vehicle-mounted device.

For specific implementation of this step, refer to the descriptions in step S1204 in the implementation shown in FIG. 12A. Details are not described herein again.

If the first ciphertext further includes an encrypted message authentication code, the vehicle further sends a fourth key to the first vehicle-mounted device.

Step S1305: The vehicle sends the second ciphertext to the second vehicle-mounted device.

Step S1306: The vehicle sends, to the second vehicle-mounted device, a first sub-key in the plurality of sub-keys obtained by dividing the first key.

If the upgrade of the first vehicle-mounted device further depends on completion of upgrade of another depended vehicle-mounted device other than the second vehicle-mounted device, the vehicle further separately sends, to the another depended vehicle-mounted device, one of the plurality of sub-keys obtained by dividing the first key.

For example, if the upgrade of the first vehicle-mounted device depends on completion of upgrade of M-1 second vehicle-mounted devices, the first key of the first upgrade file is divided into M-1 sub-keys, the vehicle sends each of the M-1 sub-keys other than the second sub-key to the M-1 second vehicle-mounted devices, and the M-1 second vehicle-mounted devices each receive one of the M-1 sub-keys.

Step S1307: The second vehicle-mounted device decrypts the second ciphertext to obtain a second upgrade file.

Step S1308: The second vehicle-mounted device sends the first sub-key to the first vehicle-mounted device after determining that the upgrade succeeds.

The second vehicle-mounted device receives the first sub-key, and sends the first sub-key to the first vehicle-mounted device after determining that the upgrade succeeds.

Step S1309: The first vehicle-mounted device performs upgrade based on the first sub-key and the first ciphertext.

The first vehicle-mounted device receives the first sub-key and the first ciphertext, and performs the upgrade based on the first sub-key and the first ciphertext.

It may be understood that, if the upgrade of the first vehicle-mounted device further depends on completion of upgrade of another depended vehicle-mounted device other than the second vehicle-mounted device, the first vehicle-mounted device further receives another sub-key sent by the another depended vehicle-mounted device, and the another sub-key is used to construct the first key. For example, if upgrade of the first vehicle-mounted device depends on completion of upgrade of the second vehicle-mounted device and the third vehicle-mounted device, the first key is divided into two sub-keys: a first sub-key and a second sub-key, and the first vehicle-mounted device further receives the second sub-key sent by the third vehicle-mounted device. The second sub-key sent by the third vehicle-mounted device to the first vehicle-mounted device is sent by the vehicle to the third vehicle-mounted device. In other words, if the upgrade of the first vehicle-mounted device depends on completion of upgrade of the M-1 depended vehicle-mounted devices, the first vehicle-mounted device separately receives, from the M-1 depended vehicle-mounted devices, one of the M-1 sub-keys obtained by dividing the first key, and receives a total of the M-1 sub-keys.

After receiving the first ciphertext, the first vehicle-mounted device determines, based on a type identifier that indicates that the first vehicle-mounted device is a dependent device and that is in a new file header included in the first ciphertext, that the first vehicle-mounted device needs to wait for one sub-key obtained by dividing a first key sent by each vehicle-mounted device on which the first vehicle-mounted device depends, to perform upgrade.

After receiving the first sub-key, the first vehicle-mounted device restores the first key based on the first sub-key, that is, restores the first key based on the received M-1 sub-keys. The first ciphertext is decrypted by using the first key, to obtain the first upgrade file. If the first ciphertext further includes an encrypted second message authentication code, the first vehicle-mounted device further decrypts the encrypted second message authentication code by using the fourth key, and verifies integrity of the obtained first upgrade file based on the second message authentication code. If the verification succeeds, the first vehicle-mounted device may perform the upgrade based on the first upgrade file.

In this implementation, a key used to decrypt a ciphertext of an upgrade file of a dependent vehicle-mounted device is divided into at least one sub-key, and a sub-key in the at least one sub-key is separately sent to a vehicle-mounted device on which upgrade of the vehicle-mounted device depends, so that after each vehicle-mounted device on which the dependent vehicle-mounted device depends is successfully upgraded, one sub-key of the at least one sub-key is sent to the dependent vehicle-mounted device, and the dependent vehicle-mounted device can restore the key based on the at least one sub-key obtained by dividing the key, to complete the upgrade. In other words, according to the method in this implementation, it is ensured that the dependent vehicle-mounted device is upgraded only after the upgrade of the vehicle-mounted devices on which the dependent vehicle-mounted device depends is completed, thereby ensuring a correct upgrade sequence, and further ensuring normal running of each vehicle-mounted device. In addition, according to the method in this implementation, a process of generating an upgrade package is simple, and upgrade efficiency is relatively high.

The foregoing describes a dependent vehicle-mounted device upgrade method of each to-be-upgraded vehicle-mounted device on a vehicle. The following describes an upgrade method for an independent vehicle-mounted device that is not a dependent vehicle-mounted device.

For the independent vehicle-mounted device, after obtaining the upgrade file of the independent vehicle-mounted device from the received upgrade package, the vehicle sends the upgrade file of the independent vehicle-mounted device to the independent vehicle-mounted device. After receiving the key of the upgrade file of the independent vehicle-mounted device from the server, the vehicle sends the key of the upgrade file of the independent device to the independent vehicle-mounted device, so that the independent vehicle-mounted device performs upgrade based on the upgrade file and the key.

For an independent device in independent vehicle-mounted devices, the vehicle may send the upgrade file and the key of the independent device to the independent device in a one-to-one manner.

For homogenous vehicle-mounted devices in the independent vehicle-mounted devices, the vehicle broadcasts a corresponding upgrade file to the homogenous vehicle-mounted devices. The vehicle sends, in a one-to-one manner, keys of corresponding upgrade files to the homogeneous vehicle-mounted devices that are mutually homogeneous. If a vehicle-mounted device that fails to be upgraded exists in the homogeneous vehicle-mounted devices that are mutually homogeneous, rollback is performed, or the vehicle-mounted device that fails to be upgraded is upgraded again. If the vehicle-mounted device still fails to be upgraded, rollback is performed.

For a plurality of groups of heterogeneous vehicle-mounted devices that are in the independent vehicle-mounted devices and that are mutually heterogeneous, the vehicle sends the upgrade file and the key of the group of heterogeneous vehicle-mounted devices to each group of heterogeneous vehicle-mounted devices. If there is a vehicle-mounted device that fails to be upgraded in the plurality of groups of heterogeneous vehicle-mounted devices that are mutually heterogeneous, rollback is performed, or the vehicle-mounted device that fails to be upgraded is upgraded again. If the vehicle-mounted device still fails to be upgraded, rollback is performed. Each group of heterogeneous vehicle-mounted devices includes one or more vehicle-mounted devices. If a group of heterogeneous vehicle-mounted devices includes a plurality of vehicle-mounted devices, the plurality of vehicle-mounted devices are homogeneous devices that are homogeneous to each other.

The foregoing describes the vehicle-mounted device upgrade method in this application. The following describes an upgrade apparatus in this application.

FIG. 14 is a schematic diagram of a structure of an upgrade apparatus according to an implementation of this application. As shown in FIG. 14, the upgrade apparatus may be the foregoing first vehicle-mounted device, or may be a component (for example, an integrated circuit or a chip) of the foregoing first vehicle-mounted device. Alternatively, the upgrade apparatus may be the foregoing second vehicle-mounted device, or may be a component (for example, an integrated circuit or a chip) of the foregoing second vehicle-mounted device. Alternatively, the upgrade apparatus may be the foregoing vehicle, or may be a component (for example, an integrated circuit or a chip) of the vehicle. Alternatively, the upgrade apparatus may be the foregoing server, or may be a component (for example, an integrated circuit or a chip) of the server. Alternatively, the upgrade apparatus may be another communication module, configured to implement the method in method implementations of this application. The upgrade apparatus 1400 may include a processing module 1402 (a processing unit). Optionally, the upgrade apparatus 1400 may further include a transceiver module 1401 (a transceiver unit) and a storage module 1403 (a storage unit).

In a possible design, one or more modules in FIG. 14 may be implemented by one or more processors, may be implemented by one or more processors and memories, may be implemented by one or more processors and transceivers, or may be implemented by one or more processors, memories, and transceivers. This is not limited in the implementations of this application. The processor, the memory, and the transceiver may be disposed separately, or may be integrated.

The upgrade apparatus has a function of implementing the first vehicle-mounted device described in the implementations of this application. For example, the upgrade apparatus includes a corresponding module, unit, or means (means) used for the first vehicle-mounted device to perform the steps that are related to the first vehicle-mounted device and that are described in the implementations of this application. The function, unit, or means (means) may be implemented by using software, or may be implemented by hardware executing corresponding software, or may be implemented by a combination of software and hardware. For details, refer to the corresponding descriptions in the foregoing corresponding method implementations.

Alternatively, the upgrade apparatus has a function of implementing the second vehicle-mounted device described in the implementations of this application. For example, the upgrade apparatus includes a corresponding module, unit, or means (means) used for the second vehicle-mounted device to perform the steps that are related to the second vehicle-mounted device and that are described in the implementations of this application. The function, unit, or means (means) may be implemented by using software, or may be implemented by hardware executing corresponding software, or may be implemented by a combination of software and hardware. For details, refer to the corresponding descriptions in the foregoing corresponding method implementations.

Alternatively, the upgrade apparatus has a function of implementing the vehicle described in implementations of this application. For example, the upgrade apparatus includes a corresponding module, unit, or means (means) used for the vehicle to perform the steps that are related to the vehicle and that are described in implementations of this application. The function, the unit, or the means (means) may be implemented by software or hardware, may be implemented by hardware executing corresponding software, or may be implemented by a combination of software and hardware. For details, refer to the corresponding descriptions in the foregoing corresponding method implementations.

Alternatively, the upgrade apparatus has a function of implementing the server described in implementations of this application. For example, the upgrade apparatus includes a corresponding module, unit, or means (means) used for the server to perform the steps that are related to the server and that are described in implementations of this application. The function, the unit, or the means (means) may be implemented by software or hardware, may be implemented by hardware executing corresponding software, or may be implemented by a combination of software and hardware. For details, refer to the corresponding descriptions in the foregoing corresponding method implementations.

Optionally, the modules in the upgrade apparatus 1400 in this implementation of this application may be configured to perform the method described in method implementations of this application.

In a first possible design, the upgrade apparatus 1400 may include a transceiver module 1401 and a processing module 1402.

The processing module 1402 is configured to perform step S209, step S1007, step S1210, and step S1308 of determining that the upgrade apparatus 1400 is upgraded successfully.

The transceiver module 1401 is configured to perform step S209, step S1007, step S1210, and step S1308 of sending a first sub-key to the first vehicle-mounted device, where the first sub-key is used to construct a first key for decrypting a first ciphertext, and the first ciphertext is obtained by encrypting a first upgrade file of the first vehicle-mounted device.

Optionally, upgrade of the first vehicle-mounted device depends on completion of upgrade of the upgrade apparatus 1400.

Optionally, before the processing module 1402 determines that the upgrade apparatus 1400 is successfully upgraded, the transceiver module 1401 is further configured to perform step S207 and step S1005 of receiving a second ciphertext, where the second ciphertext is obtained by encrypting a second upgrade file of the upgrade apparatus and the first sub-key; and the processing module 1402 is further configured to perform step S207 and step S1005 of decrypting the second ciphertext, to obtain the first sub-key.

Optionally, before the processing module 1402 determines that the upgrade apparatus 1400 is successfully upgraded, the transceiver module 1401 is further configured to perform step S1308 and step S1210 of receiving the first sub-key.

The second vehicle-mounted device further performs step S208, step S1006, step S1209, and step S1307 of upgrade according to the decrypted second upgrade file.

The upgrade apparatus 1400 in the first possible design may be the second vehicle-mounted device or a component of the second vehicle-mounted device in the method implementation shown in FIG. 2A and FIG. 2B, FIG. 10A and FIG. 10B, FIG. 12A and FIG. 12B, or FIG. 13A and FIG. 13B.

In a second possible design, the upgrade apparatus 1400 may include a transceiver module 1401 and a processing module 1402.

The transceiver module 1401 is configured to perform step S210, step S1008, step S1211, and step S1309 of receiving a first ciphertext, a first sub-key, and a second sub-key, where the first ciphertext is obtained by encrypting a first upgrade file of the upgrade apparatus 1400, and the first sub-key and the second sub-key are used to construct a first key for decrypting the first ciphertext.

The processing module 1402 is configured to perform step S210, step S1008, step S1211, and step S1309 of upgrade according to the first sub-key, the second sub-key, and the first ciphertext.

Optionally, the transceiver module 1401 is specifically configured to perform step S210 and step S1211 of receiving the first sub-key from a first device and receiving the second sub-key from a second device, where the first device is a second vehicle-mounted device, and the second device is a vehicle in which the upgrade apparatus is located.

Optionally, the transceiver module 1401 is specifically configured to perform step S1008 and step S1309 of receiving the first sub-key from a first device and receiving the second sub-key from a second device, where the first device is a second vehicle-mounted device, and the second device is a third vehicle-mounted device.

Optionally, the transceiver module 1401 is further configured to receive an identifier of the second vehicle-mounted device; or the transceiver module is further configured to receive an identifier of the second vehicle-mounted device and an identifier of the third vehicle-mounted device.

The upgrade apparatus 1400 in the second possible design may be the first vehicle-mounted device or a component of the first vehicle-mounted device in the method implementation shown in FIG. 2A and FIG. 2B, FIG. 10A and FIG. 10B, FIG. 12A and FIG. 12B, or FIG. 13A and FIG. 13B.

In third possible design, the upgrade apparatus 1400 may include a transceiver module 1401.

The transceiver module 1401 is configured to perform step S204 and step S1204 of sending a first ciphertext to the first vehicle-mounted device, where the first ciphertext is obtained by encrypting a first upgrade file of the first vehicle-mounted device; and perform step S205 and step S1205 of sending a second sub-key to the first vehicle-mounted device, where the second sub-key is used to construct a first key for decrypting the first ciphertext.

Optionally, the transceiver module 1401 is further configured to perform step S1207 to further send a first sub-key to a second vehicle-mounted device, where the first sub-key is used to construct the first key.

Optionally, the transceiver module is further configured to receive an upgrade policy, where the upgrade policy indicates that upgrade of the first vehicle-mounted device depends on completion of upgrade of the second vehicle-mounted device.

Optionally, the transceiver module is further configured to send an upgrade policy to the vehicle, where the upgrade policy indicates that upgrade of the first vehicle-mounted device depends on completion of upgrade of the second vehicle-mounted device.

Optionally, the transceiver module 1401 is further configured to perform step S204 and step S1204 of sending the identifier of the second vehicle-mounted device to the first vehicle-mounted device.

Optionally, the transceiver module 1401 is further configured to perform step S206 and step S1206 of sending the second ciphertext to the second vehicle-mounted device.

The upgrade apparatus 1400 in the third possible design may be the vehicle or a component of the vehicle in the method implementation shown in FIG. 2A and FIG. 2B, or FIG. 12A and FIG. 12B.

In fourth possible design, the upgrade apparatus 1400 may include a transceiver module 1401.

The transceiver module 1401, configured to perform step S804 of sending a first upgrade file to the first vehicle-mounted device, where the upgrade apparatus 1400 is an apparatus in which the first vehicle-mounted device is located.

The transceiver module 1401 is further configured to perform step S806, to separately send each part of the first key of the first upgrade file to each second vehicle-mounted device.

The transceiver module 1401 is configured to perform step S1304 of sending a first ciphertext to a first vehicle-mounted device, where the first ciphertext is obtained by encrypting a first upgrade file of the first vehicle-mounted device; and perform step S1306 of sending a first sub-key to the second vehicle-mounted device, where the first sub-key is used to construct a first key for decrypting the first ciphertext.

Optionally, the transceiver module is further configured to receive an upgrade policy, where the upgrade policy indicates that upgrade of the first vehicle-mounted device depends on completion of upgrade of the second vehicle-mounted device.

Optionally, the transceiver module is further configured to send an upgrade policy to the vehicle, where the upgrade policy indicates that upgrade of the first vehicle-mounted device depends on completion of upgrade of the second vehicle-mounted device.

Optionally, the transceiver module 1401 is further configured to perform step S1304 of sending the identifier of the second vehicle-mounted device to the first vehicle-mounted device.

Optionally, the transceiver module 1401 is further configured to perform step S1305 of sending the second ciphertext to the second vehicle-mounted device.

The upgrade apparatus 1400 in the fourth possible design may be the vehicle or a component of the vehicle in the method implementation shown in FIG. 13A and FIG. 13B.

In a fifth possible design, the upgrade apparatus 1400 may include a transceiver module 1401 and a processing module 1402.

The processing module 1402 is configured to perform step S201, step S901, step S1001, and step S1101 of generating a second ciphertext based on a first piece of information, where the first piece of information includes a second upgrade file of a second vehicle-mounted device and a first sub-key, the first sub-key is used to construct a first key for decrypting the first ciphertext, and the first ciphertext is obtained by encrypting the first upgrade file of the first vehicle-mounted device.

The transceiver module 1401 is configured to perform step S202, step S902, step S1002, and step S1102 of sending the second ciphertext to the second vehicle-mounted device.

Optionally, the first piece of information further includes a first identifier of the first vehicle-mounted device, and the first identifier is associated with the first sub-key.

Optionally, the first piece of information further includes indication information, the indication information indicates a quantity of dependent vehicle-mounted devices, upgrade of the dependent vehicle-mounted device depends on completion of upgrade of the second vehicle-mounted device, and the dependent devices include the first vehicle-mounted device.

Optionally, the first piece of information further includes a type identifier of the second vehicle-mounted device.

Optionally, the transceiver module 1401 is further configured to send an upgrade policy to the vehicle, where the upgrade policy indicates that upgrade of the first vehicle-mounted device depends on completion of upgrade of the second vehicle-mounted device.

Optionally, the transceiver module 1401 is further configured to perform step S203 and step S903 of sending a second sub-key to the vehicle, where the second sub-key is used to construct the first key.

The upgrade apparatus 1400 in the fifth possible design may be the component of the server in the method implementation in FIG. 2A and FIG. 2B, FIG. 9A and FIG. 9B, FIG. 10A and FIG. 10B, or FIG. 11A and FIG. 11B.

In a sixth possible design, the upgrade apparatus 1400 may include a transceiver module 1401 and a processing module 1402.

The processing module 1402 is configured to perform step S908 and step S1107 of determining that upgrade of the upgrade apparatus 1400 succeeds. The transceiver module 1401 is configured to perform step S903 of sending a first sub-key to a vehicle, where the first sub-key is used to construct a first key for decrypting a first ciphertext, and the first ciphertext is obtained by encrypting a first upgrade file of a first vehicle-mounted device.

Before the processing module 1402 determines that the upgrade apparatus 1400 is successfully upgraded, the transceiver module 1401 is further configured to receive a second ciphertext, where the second ciphertext is obtained by encrypting the second upgrade file of the upgrade apparatus 1400 and the first sub-key; and the processing module is further configured to decrypt the second ciphertext to obtain the first sub-key.

The upgrade apparatus 1400 in the sixth possible design may be the second vehicle-mounted device or a component of the second vehicle-mounted device in the method implementation shown in FIG. 9A and FIG. 9B, or FIG. 11A and FIG. 11B.

In a seventh possible design, the upgrade apparatus 1400 may include a transceiver module 1401 and a processing module 1402.

The transceiver module 1401 is configured to perform step S909 and step S1108 of receiving a first sub-key and a second sub-key, where the first sub-key and the second sub-key are used to construct a first key for decrypting a first ciphertext, and the first ciphertext is obtained by encrypting a first upgrade file of a first vehicle-mounted device. The processing module 1402 is configured to perform step S909 and step S1108 of constructing the first key based on the first sub-key and the second sub-key. The transceiver module 1401 is further configured to perform step S910 and step S1109 of sending the first key to the first vehicle-mounted device.

In a possible implementation, the transceiver module is specifically configured to perform step S909 of receiving a first sub-key from a first device and receiving a second sub-key from a second device, where the first device is a second vehicle-mounted device, and the second device is a server.

In a possible implementation, the transceiver module is specifically configured to perform step S1108 of receiving a first sub-key from a first device and receiving a second sub-key from a second device, where the first device is a second vehicle-mounted device, and the second device is a third vehicle-mounted device.

The upgrade apparatus 1400 in the seventh possible design may be the vehicle or a component of the vehicle in the method implementation shown in FIG. 9A and FIG. 9B, or FIG. 11A and FIG. 11B.

The apparatus in this implementation may be configured to perform the technical solutions of the foregoing method implementations. Implementation principles and technical effects of the apparatus are similar to those of the foregoing method implementations. Details are not described herein again.

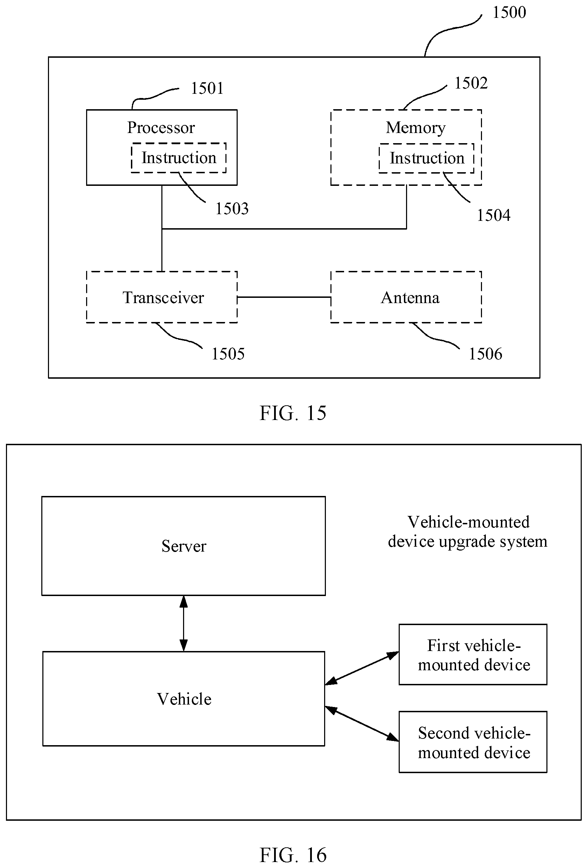

FIG. 15 is a schematic block diagram of an implementation of an electronic device according to an implementation of this application. The electronic device in this implementation may be the foregoing first vehicle-mounted device, or may be the foregoing second vehicle-mounted device, or may be the foregoing vehicle, or may be the foregoing server. The electronic device may be configured to implement the method corresponding to the first vehicle-mounted device, the second vehicle-mounted device, the vehicle, or the server described in the foregoing method implementations. For details, refer to the descriptions in the foregoing method implementations.

The electronic device may include one or more processors 1501, and the processor 1501 may also be referred to as a processing unit, and may implement a specific control function. The processor 1501 may be a general purpose processor, a dedicated processor, or the like.

In an optional design, the processor 1501 may also store instructions and/or data 1503, and the instructions and/or data 1503 may be run on the processor, so that the electronic device performs the method described in the foregoing method implementations.

In another optional design, the processor 1501 may include a transceiver unit configured to implement a sending function and a receiving function. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the electronic device may include one or more memories 1502, and the memory 1502 may store instructions 1504. The instructions may be run on the processor, so that the electronic device performs the method described in the foregoing method implementations. Optionally, the memory may further store data. Optionally, the processor may also store instructions and/or data. The processor and the memory may be separately disposed, or may be integrated together. For example, the correspondence described in the foregoing method implementations may be stored in the memory or stored in the processor.

Optionally, the electronic device may further include a transceiver 1505 and/or an antenna 1506. The processor 1501 may be referred to as a processing unit that controls the electronic device. The transceiver 1505 may be referred to as a transceiver unit, a transceiver device, a transceiver circuit, a transceiver, or the like, and is configured to implement sending and receiving functions.

The processor and the transceiver described in this implementation may be manufactured by using various IC process technologies, such as a complementary metal oxide semiconductor (complementary metal oxide semiconductor, CMOS), an n-type metal oxide semiconductor (nMetal-oxide-semiconductor, NMOS), a p-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

It should be understood that the processor in implementations of this application may be an integrated circuit chip, and has a signal processing capability. In an implementation process, steps in the foregoing method implementation may be implemented by using a hardware integrated logic circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component.

It may be understood that the memory in implementations of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include but is not limited to these memories and any memory of another appropriate type.

A scope of the electronic device described in this implementation of this application is not limited thereto, and a structure of the electronic device may not be limited in FIG. 15. The electronic device described in this implementation of this application may be an independent device or may be a part of a larger device.

FIG. 16 is a schematic diagram of a structure of a vehicle-mounted device upgrade system according to an implementation of this application. Refer to FIG. 16. The upgrade system for a vehicle-mounted device includes a first vehicle-mounted device, at least one second vehicle-mounted device, a vehicle, and a server.

In a manner, the first vehicle-mounted device may implement the method corresponding to the first vehicle-mounted device in the implementation shown in FIG. 2A and FIG. 2B, the second vehicle-mounted device may be configured to implement the method corresponding to the second vehicle-mounted device in the implementation shown in FIG. 2A and FIG. 2B, the vehicle may be configured to implement the method corresponding to the vehicle in the implementation shown in FIG. 2A and FIG. 2B, and the server may implement the method corresponding to the server in the implementation shown in FIG. 2A and FIG. 2B.

In another manner, the first vehicle-mounted device may implement the method corresponding to the first vehicle-mounted device in the implementation shown in FIG. 9A and FIG. 9B, the second vehicle-mounted device may be configured to implement the method corresponding to the second vehicle-mounted device in the implementation shown in FIG. 9A and FIG. 9B, the vehicle may be configured to implement the method corresponding to the vehicle in the implementation shown in FIG. 9A and FIG. 9B, and the server may implement the method corresponding to the server in the implementation shown in FIG. 9A and FIG. 9B.

In still another manner, the first vehicle-mounted device may implement the method corresponding to the first vehicle-mounted device in the implementation shown in FIG. 10A and FIG. 10B, the second vehicle-mounted device may be configured to implement the method corresponding to the second vehicle-mounted device in the implementation shown in FIG. 10A and FIG. 10B, the vehicle may be configured to implement the method corresponding to the vehicle in the implementation shown in FIG. 10A and FIG. 10B, and the server may implement the method corresponding to the server in the implementation shown in FIG. 10A and FIG. 10B.

In still another manner, the first vehicle-mounted device may implement the method corresponding to the first vehicle-mounted device in the implementation shown in FIG. 11A and FIG. 11B, the second vehicle-mounted device may be configured to implement the method corresponding to the second vehicle-mounted device in the implementation shown in FIG. 11A and FIG. 11B, the vehicle may be configured to implement the method corresponding to the vehicle in the implementation shown in FIG. 11A and FIG. 11B, and the server may implement the method corresponding to the server in the implementation shown in FIG. 11A and FIG. 11B.

In still another manner, the first vehicle-mounted device may implement the method corresponding to the first vehicle-mounted device in the implementation shown in FIG. 12A and FIG. 12B, the second vehicle-mounted device may be configured to implement the method corresponding to the second vehicle-mounted device in the implementation shown in FIG. 12A and FIG. 12B, the vehicle may be configured to implement the method corresponding to the vehicle in the implementation shown in FIG. 12A and FIG. 12B, and the server may implement the method corresponding to the server in the implementation shown in FIG. 12A and FIG. 12B.

In still another manner, the first vehicle-mounted device may implement the method corresponding to the first vehicle-mounted device in the implementation shown in FIG. 13A and FIG. 13B, the second vehicle-mounted device may be configured to implement the method corresponding to the second vehicle-mounted device in the implementation shown in FIG. 13A and FIG. 13B, the vehicle may be configured to implement the method corresponding to the vehicle in the implementation shown in FIG. 13A and FIG. 13B, and the server may implement the method corresponding to the server in the implementation shown in FIG. 13A and FIG. 13B.

The system in this implementation may be configured to perform the technical solution in any one of the foregoing method implementation, and an implementation principle and a technical effect of the system are similar to those in the foregoing method implementation. Details are not described herein again.

This application further provides a computer-readable medium. The computer-readable medium stores a computer program. When the computer program is executed by a computer, the function of the first vehicle-mounted device, the function of the second vehicle-mounted device, the function of the server, or the function of the vehicle in any one of the foregoing method implementations is implemented.

This application further provides a computer program product. When the computer program product is executed by a computer, a function of the first vehicle-mounted device, a function of the second vehicle-mounted device, a function of a server, or a function of a vehicle in any one of the foregoing method implementations is implemented.

When software is used to implement the foregoing implementations, the foregoing implementations may be implemented completely or partially in a form of a computer program product. The computer program product includes one or more computer instructions. When the computer instructions are loaded and executed on a computer, the procedures or functions according to implementations of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disk, SSD)), or the like.

In the several implementations provided in this application, it should be understood that the disclosed system, apparatus, and method may be implemented in other manners. For example, the foregoing apparatus implementations are merely examples. For example, division of the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in implementations.

In addition, functional units in implementations of this application may be integrated into one processing unit, each of the units may exist alone physically, or two or more units may be integrated into one unit.

When the functions are implemented in a form of a software functional unit and sold or used as an independent product, the functions may be stored in the computer-readable storage medium. Based on such an understanding, the technical solutions in this application essentially, the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in implementations of this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

It should be understood that, an "implementation" mentioned throughout this specification means that particular features, structures, or characteristics related to the implementation are included in at least one implementation of this application. Therefore, implementations in the entire specification do not necessarily refer to a same implementation. Moreover, the particular features, structures, or characteristics may be combined in one or more implementations in any proper manner. It should be understood that sequence numbers of the foregoing processes do not mean execution sequence in various implementations of this application. The execution sequence of the processes should be determined based on functions and internal logic of the processes, and should not be construed as any limitation on the implementation processes of implementations of this application.

It should be further understood that, in this application, "when", "if", and "if" all mean that the terminal device or the server performs corresponding processing in an objective case, and are not time-limited, and the terminal device or the server is not necessarily required to perform a determining action during implementation, this does not mean that there is another limitation.

In this application, unless otherwise specified, an element represented in a singular form is intended to represent "one or more", but is not intended to represent "one and only one". In this application, unless otherwise specified, "at least one" is intended to represent "one or more", and "a plurality of" is intended to represent "two or more".

In addition, the term "and/or" in this specification describes only an association relationship for describing associated objects and represents that three relationships may exist. For example, A and/or B may represent the following three cases: Only A exists, both A and B exist, and only B exists. A may be singular or plural, and B may be singular or plural.

The character "/" usually indicates an "or" relationship between the associated objects.

The term "at least one of" in this specification indicates all or any combination of listed items. For example, "at least one of A, B, and C" may indicate the following six cases: Only A exists, only B exists, only C exists, both A and B exist, both B and C exist, and A, B, and C exist. A may be singular or plural, B may be singular or plural, and C may be singular or plural.

It should be understood that in implementations of this application, "B corresponding to A" indicates that B is associated with A, and B may be determined based on A. However, it should be further understood that determining B based on A does not mean that B is determined based only on A. That is, B may also be determined based on A and/or other information.

The scope of protection is defined by the appended claims.

## Claims

1. A vehicle-mounted device upgrade method, comprising:
determining, by a second vehicle-mounted device, that an upgrade of the second vehicle-mounted device succeeds; and
sending (S209), by the second vehicle-mounted device, a first sub-key to a first vehicle-mounted device, wherein the first sub-key is used to construct a first key for decrypting a first cipher text, and the first cipher text is obtained by encrypting a first upgrade file of the first vehicle-mounted device, wherein upgrade of the first vehicle-mounted device depends on completion of upgrade of the second vehicle-mounted device;
wherein before the determining, by a second vehicle-mounted device, that an upgrade of the second vehicle-mounted device succeeds, the method further comprises:
receiving, by the second vehicle-mounted device, a second cipher text, wherein the second cipher text is obtained by encrypting a second upgrade file of the second vehicle-mounted device and the first sub-key; and
decrypting, by the second vehicle-mounted device, the second cipher text to obtain the first sub-key.

2. The method according to claim 1, further comprising:
receiving, by the first vehicle-mounted device, the first cipher text;
receiving, by the first vehicle-mounted device, the first sub-key and a second sub-key, wherein the first sub-key and the second sub-key are used to construct a first key for decrypting the first cipher text; and
performing, by the first vehicle-mounted device, upgrade based on the first sub-key, the second sub-key, and the first cipher text.

3. The method according to claim 2, wherein the receiving, by the first vehicle-mounted device, the first sub-key and a second sub-key comprises:
receiving, by the first vehicle-mounted device, the first sub-key from a first device; and
receiving, by the first vehicle-mounted device, the second sub-key from a second device, wherein
the first device is the second vehicle-mounted device, and the second device is a vehicle in which the first vehicle-mounted device is located or a third vehicle-mounted device.

4. The method according to claim 3, further comprising:
receiving, by the first vehicle-mounted device, an identifier of the second vehicle-mounted device; or
receiving, by the first vehicle-mounted device, an identifier of the second vehicle-mounted device and an identifier of the third vehicle-mounted device.

5. The method according to any one of claims 1 to 4, further comprising:
generating, by a server, the second cipher text based on a first piece of information, wherein the first piece of information comprises the second upgrade file of the second vehicle-mounted device and the first sub-key; and
sending, by the server, the second cipher text to the second vehicle-mounted device.

6. The method according to claim 5, wherein the first piece of information further comprises a first identifier of the first vehicle-mounted device, and the first identifier is associated with the first sub-key.

7. The method according to claim 5 or 6, wherein the first piece of information further comprises indication information, the indication information indicates a quantity of dependent vehicle-mounted devices, upgrade of the dependent vehicle-mounted device depends on completion of upgrade of the second vehicle-mounted device, and the dependent devices comprise the first vehicle-mounted device.

8. The method according to any one of claims 5 to 6, further comprising:
sending, by the server, an upgrade policy to a vehicle, wherein the upgrade policy indicates that upgrade of the first vehicle-mounted device depends on completion of upgrade of the second vehicle-mounted device, wherein the first vehicle-mounted device and the second vehicle-mounted device are located in the vehicle.

9. A vehicle-mounted device upgrade system, comprising a first vehicle-mounted device and a second vehicle-mounted device, wherein the second vehicle-mounted device is configured to:
determine that an upgrade of the second vehicle-mounted device succeeds; and
send a first sub-key to the first vehicle-mounted device, wherein the first sub-key is used to construct a first key for decrypting a first cipher text, and the first cipher text is obtained by encrypting a first upgrade file of the first vehicle-mounted device, wherein upgrade of the first vehicle-mounted device depends on completion of upgrade of the second vehicle-mounted device;
wherein the second vehicle-mounted device is further configured to:
receive a second cipher text, wherein the second cipher text is obtained by encrypting a second upgrade file of the second vehicle-mounted device and the first sub-key; and
decrypt the second cipher text to obtain the first sub-key.

10. The system according to claim 9, wherein the first vehicle-mounted device is configured to:
receive the first cipher text;
receive the first sub-key and a second sub-key, wherein the first sub-key and the second sub-key are used to construct a first key for decrypting the first cipher text; and
perform upgrade based on the first sub-key, the second sub-key, and the first cipher text.

11. The system according to claim 9 or 10, further comprising a server, wherein the server is configured to:
generate the second cipher text based on a first piece of information, wherein the first piece of information comprises the second upgrade file of the second vehicle-mounted device and the first sub-key; and
send the second cipher text to the second vehicle-mounted device.

12. The system according to claim 11, wherein the first piece of information further comprises a first identifier of the first vehicle-mounted device, and the first identifier is associated with the first sub-key.

13. The system according to claim 11 or 12, wherein the first piece of information further comprises indication information, the indication information indicates a quantity of dependent vehicle-mounted devices, upgrade of the dependent vehicle-mounted device depends on completion of upgrade of the second vehicle-mounted device, and the dependent devices comprise the first vehicle-mounted device.

## Patentansprüche

1. Aufrüstungsverfahren für fahrzeugmontierte Geräte, umfassend:
Bestimmen, durch ein zweites fahrzeugmontiertes Gerät, dass eine Aufrüstung des zweiten fahrzeugmontierten Geräts erfolgreich ist; und
Senden (S209), durch das zweite fahrzeugmontierte Gerät, eines ersten Unterschlüssels an ein erstes fahrzeugmontiertes Gerät, wobei der erste Unterschlüssel verwendet wird, um einen ersten Schlüssel zum Entschlüsseln eines ersten Chiffriertextes zu konstruieren, und der erste Chiffriertext durch Verschlüsseln einer ersten Aufrüstungsdatei des ersten fahrzeugmontierten Geräts erlangt wird, wobei die Aufrüstung des ersten fahrzeugmontierten Geräts vom Abschluss der Aufrüstung des zweiten fahrzeugmontierten Geräts abhängt;
wobei das Verfahren vor dem Bestimmen, durch ein zweites fahrzeugmontiertes Gerät, dass eine Aufrüstung des zweiten fahrzeugmontierten Geräts erfolgreich ist, ferner Folgendes umfasst:
Empfangen, durch das zweite fahrzeugmontierte Gerät, eines zweiten Chiffriertextes, wobei der zweite Chiffriertext durch Verschlüsseln einer zweiten Aufrüstungsdatei des zweiten fahrzeugmontierten Geräts und des ersten Unterschlüssels erlangt wird; und
Entschlüsseln, durch das zweite fahrzeugmontierte Gerät, des zweiten Chiffriertextes, um den ersten Unterschlüssel zu erlangen.

2. Verfahren nach Anspruch **1,** ferner umfassend:
Empfangen, durch das erste fahrzeugmontierte Gerät, des ersten Chiffriertextes;
Empfangen, durch das erste fahrzeugmontierte Gerät, des ersten Unterschlüssels und eines zweiten Unterschlüssels, wobei der erste Unterschlüssel und der zweite Unterschlüssel verwendet werden, um einen ersten Schlüssel zum Entschlüsseln des ersten Chiffriertextes zu konstruieren; und
Durchführen, durch das erste fahrzeugmontierte Gerät, einer Aufrüstung basierend auf dem ersten Unterschlüssel, dem zweiten Unterschlüssel und dem ersten Chiffriertext.

3. Verfahren nach Anspruch **2,** wobei das Empfangen, durch das erste fahrzeugmontierte Gerät, des ersten Unterschlüssels und eines zweiten Unterschlüssels Folgendes umfasst:
Empfangen, durch das erste fahrzeugmontierte Gerät, des ersten Unterschlüssels von einem ersten Gerät; und
Empfangen, durch das erste fahrzeugmontierte Gerät, des zweiten Unterschlüssels von einem zweiten Gerät, wobei
das erste Gerät das zweite fahrzeugmontierte Gerät ist und das zweite Gerät ein Fahrzeug, in dem sich das erste fahrzeugmontierte Gerät befindet, oder ein drittes fahrzeugmontiertes Gerät **ist.**

4. Verfahren nach Anspruch **3,** ferner umfassend:
Empfangen, durch das erste fahrzeugmontierte Gerät, einer Kennung des zweiten fahrzeugmontierten Geräts; oder
Empfangen, durch das erste fahrzeugmontierte Gerät, einer Kennung des zweiten fahrzeugmontierten Geräts und einer Kennung des dritten fahrzeugmontierten Geräts.

5. Verfahren nach einem der Ansprüche 1 bis 4, ferner umfassend:
Generieren, durch einen Server, des zweiten Chiffriertextes basierend auf einem ersten Teil von Informationen, wobei der erste Teil von Informationen die zweite Aufrüstungsdatei des zweiten fahrzeugmontierten Geräts und den ersten Unterschlüssel umfasst; und
Senden, durch den Server, des zweiten Chiffriertextes an das zweite fahrzeugmontierte Gerät.

6. Verfahren nach Anspruch 5, wobei der erste Teil von Informationen ferner eine erste Kennung des ersten fahrzeugmontierten Geräts umfasst und die erste Kennung dem ersten Unterschlüssel zugeordnet ist.

7. Verfahren nach Anspruch 5 oder 6, wobei der erste Teil von Informationen ferner Angabeinformationen umfasst, die Angabeinformationen eine Menge an abhängigen fahrzeugmontierten Geräten angeben, die Aufrüstung des abhängigen fahrzeugmontierten Geräts vom Abschluss der Aufrüstung des zweiten fahrzeugmontierten Geräts abhängt und die abhängigen Geräte das erste fahrzeugmontierte Gerät umfassen.

8. Verfahren nach einem der Ansprüche 5 bis 6, ferner umfassend:
Senden, durch den Server, einer Aufrüstungsrichtlinie an ein Fahrzeug, wobei die Aufrüstungsrichtlinie angibt, dass die Aufrüstung des ersten fahrzeugmontierten Geräts vom Abschluss der Aufrüstung des zweiten fahrzeugmontierten Geräts abhängt, wobei sich das erste fahrzeugmontierte Gerät und das zweite fahrzeugmontierte Gerät in dem Fahrzeug befinden.

9. Aufrüstungssystem für fahrzeugmontierte Geräte, umfassend ein erstes fahrzeugmontiertes Gerät und ein zweites fahrzeugmontiertes Gerät, wobei das zweite fahrzeugmontierte Gerät zu Folgendem konfiguriert ist:
Bestimmen, dass eine Aufrüstung des zweiten fahrzeugmontierten Geräts erfolgreich ist; und
Senden eines ersten Unterschlüssels an das erste fahrzeugmontierte Gerät, wobei der erste Unterschlüssel verwendet wird, um einen ersten Schlüssel zum Entschlüsseln eines ersten Chiffriertextes zu konstruieren, und der erste Chiffriertext durch Verschlüsseln einer ersten Aufrüstungsdatei des ersten fahrzeugmontierten Geräts erlangt wird, wobei die Aufrüstung des ersten fahrzeugmontierten Geräts vom Abschluss der Aufrüstung des zweiten fahrzeugmontierten Geräts abhängt;
wobei das zweite fahrzeugmontierte Gerät ferner zu Folgendem konfiguriert ist:
Empfangen eines zweiten Chiffriertextes, wobei der zweite Chiffriertext durch Verschlüsseln einer zweiten Aufrüstungsdatei des zweiten fahrzeugmontierten Geräts und des ersten Unterschlüssels erlangt wird; und
Entschlüsseln des zweiten Chiffriertextes, um den ersten Unterschlüssel zu erlangen.

10. System nach Anspruch 9, wobei das erste fahrzeugmontierte Gerät zu Folgendem konfiguriert ist:
Empfangen des ersten Chiffriertextes;
Empfangen des ersten Unterschlüssels und eines zweiten Unterschlüssels, wobei der erste Unterschlüssel und der zweite Unterschlüssel verwendet werden, um einen ersten Schlüssel zum Entschlüsseln des ersten Chiffriertextes zu konstruieren; und
Durchführen der Aufrüstung basierend auf dem ersten Unterschlüssel, dem zweiten Unterschlüssel und dem ersten Chiffriertext.

11. System nach Anspruch 9 oder 10, ferner umfassend einen Server, wobei der Server zu Folgendem konfiguriert ist:
Generieren des zweiten Chiffriertextes basierend auf einem ersten Teil von Informationen, wobei der erste Teil von Informationen die zweite Aufrüstungsdatei des zweiten fahrzeugmontierten Geräts und den ersten Unterschlüssel umfasst; und
Senden des zweiten Chiffriertextes an das zweite fahrzeugmontierte Gerät.

12. System nach Anspruch 11, wobei der erste Teil von Informationen ferner eine erste Kennung des ersten fahrzeugmontierten Geräts umfasst und die erste Kennung dem ersten Unterschlüssel zugeordnet ist.

13. System nach Anspruch 11 oder 12, wobei der erste Teil von Informationen ferner Angabeinformationen umfasst, die Angabeinformationen eine Menge an abhängigen fahrzeugmontierten Geräten angeben, die Aufrüstung des abhängigen fahrzeugmontierten Geräts vom Abschluss der Aufrüstung des zweiten fahrzeugmontierten Geräts abhängt und die abhängigen Geräte das erste fahrzeugmontierte Gerät umfassen.

## Revendications

1. Procédé de mise à niveau de dispositif embarqué, comprenant :
la détermination, par un deuxième dispositif embarqué, qu'une mise à niveau du deuxième dispositif embarqué réussit ; et
l'envoi (S209), par le deuxième dispositif embarqué, d'une première sous-clé à un premier dispositif embarqué, dans lequel la première sous-clé est utilisée pour construire une première clé permettant de décrypter un premier texte crypté, et le premier texte crypté est obtenu en cryptant un premier fichier de mise à niveau du premier dispositif embarqué, dans lequel la mise à niveau du premier dispositif embarqué dépend de l'achèvement de la mise à niveau du deuxième dispositif embarqué ;
dans lequel avant la détermination, par un deuxième dispositif embarqué, qu'une mise à niveau du deuxième dispositif embarqué réussit, le procédé comprend également :
la réception, par le deuxième dispositif embarqué, d'un second texte crypté, dans lequel le second texte crypté est obtenu en cryptant un second fichier de mise à niveau du deuxième dispositif embarqué et la première sous-clé ; et
le décryptage, par le deuxième dispositif embarqué, du second texte crypté pour obtenir la première sous-clé.

2. Procédé selon la revendication 1, comprenant également :
la réception, par le premier dispositif embarqué, du premier texte crypté ;
la réception, par le premier dispositif embarqué, de la première sous-clé et d'une seconde sous-clé, dans lequel la première sous-clé et la seconde sous-clé sont utilisées pour construire une première clé permettant de décrypter le premier texte crypté ; et
la réalisation, par le premier dispositif embarqué, d'une mise à niveau sur la base de la première sous-clé, de la seconde sous-clé et du premier texte crypté.

3. Procédé selon la revendication 2, dans lequel la réception, par le premier dispositif embarqué, de la première sous-clé et d'une seconde sous-clé comprend :
la réception, par le premier dispositif embarqué, de la première sous-clé d'un premier dispositif ; et
la réception, par le premier dispositif embarqué, de la seconde sous-clé d'un deuxième dispositif, dans lequel
le premier dispositif est le deuxième dispositif embarqué, et le deuxième dispositif est un véhicule dans lequel se trouve le premier dispositif embarqué ou un troisième dispositif embarqué.

4. Procédé selon la revendication 3, comprenant également :
la réception, par le premier dispositif embarqué, d'un identifiant du deuxième dispositif embarqué ; ou
la réception, par le premier dispositif embarqué, d'un identifiant du deuxième dispositif embarqué et d'un identifiant du troisième dispositif embarqué.

5. Procédé selon l'une quelconque des revendications 1 à 4, comprenant également :
la génération, par un serveur, du second texte crypté sur la base d'une première information, dans lequel la première information comprend le second fichier de mise à niveau du deuxième dispositif embarqué et la première sous-clé ; et
l'envoi, par le serveur, du second texte crypté au deuxième dispositif embarqué.

6. Procédé selon la revendication 5, dans lequel la première information comprend également un premier identifiant du premier dispositif embarqué, et le premier identifiant est associé à la première sous-clé.

7. Procédé selon la revendication 5 ou 6, dans lequel la première information comprend également des informations d'indication, les informations d'indication indiquent une quantité de dispositifs embarqués dépendants, la mise à niveau du dispositif embarqué dépendant dépend de l'achèvement de la mise à niveau du deuxième dispositif embarqué, et les dispositifs dépendants comprennent le premier dispositif embarqué.

8. Procédé selon l'une quelconque des revendications 5 ou 6, comprenant également :
l'envoi, par le serveur, d'une politique de mise à niveau à un véhicule, dans lequel la politique de mise à niveau indique que la mise à niveau du premier dispositif embarqué dépend de l'achèvement de la mise à niveau du deuxième dispositif embarqué, dans lequel le premier dispositif embarqué et le deuxième dispositif embarqué sont situés dans le véhicule.

9. Système de mise à niveau de dispositif embarqué, comprenant un premier dispositif embarqué et un deuxième dispositif embarqué, dans lequel le deuxième dispositif embarqué est configuré pour :
déterminer qu'une mise à niveau du deuxième dispositif embarqué réussit ; et
envoyer une première sous-clé au premier dispositif embarqué, dans lequel la première sous-clé est utilisée pour construire une première clé permettant de décrypter un premier texte crypté, et le premier texte crypté est obtenu en cryptant un premier fichier de mise à niveau du premier dispositif embarqué, dans lequel la mise à niveau du premier dispositif embarqué dépend de l'achèvement de la mise à niveau du deuxième dispositif embarqué ;
dans lequel le deuxième dispositif embarqué est également configuré pour :
recevoir un second texte crypté, dans lequel le second texte crypté est obtenu en cryptant un second fichier de mise à niveau du deuxième dispositif embarqué et la première sous-clé ; et
décrypter le second texte crypté pour obtenir la première sous-clé.

10. Système selon la revendication 9, dans lequel le premier dispositif embarqué est configuré pour :
recevoir le premier texte crypté ;
recevoir la première sous-clé et une seconde sous-clé, dans lequel la première sous-clé et la seconde sous-clé sont utilisées pour construire une première clé permettant de décrypter le premier texte crypté ; et
réaliser une mise à niveau sur la base de la première sous-clé, de la seconde sous-clé et du premier texte crypté.

11. Système selon la revendication 9 ou 10, comprenant également un serveur, dans lequel le serveur est configuré pour :
générer le second texte crypté sur la base d'une première information, dans lequel la première information comprend le second fichier de mise à niveau du deuxième dispositif embarqué et la première sous-clé ; et
envoyer le second texte crypté au deuxième dispositif embarqué.

12. Système selon la revendication 11, dans lequel la première information comprend également un premier identifiant du premier dispositif embarqué, et le premier identifiant est associé à la première sous-clé.

13. Système selon la revendication 11 ou 12, dans lequel la première information comprend également des informations d'indication, les informations d'indication indiquent une quantité de dispositifs embarqués dépendants, la mise à niveau du dispositif embarqué dépendant dépend de l'achèvement de la mise à niveau du deuxième dispositif embarqué, et les dispositifs dépendants comprennent le premier dispositif embarqué.
